# EUROPEAN PATENT APPLICATION

(11) **EP 1 307 053 A2**
(43) Date of publication of application: **02.05.2003**
(21) Application number: 02257434.7
(22) Date of filing: 25.10.2002
(51) Int. Cl.: H04N 7/24

(54) **Preview system for data broadcast contents**

(30) Priority: 26.10.2001 JP 2001328809; 11.03.2002 JP 2002064907
(71) Applicant: MATSUSHITA ELECTRIC INDUSTRIAL CO., LTD., Kadoma-shi, Osaka 571-8501 (JP)
(72) Inventor: Ozawa, Yuka, Moriguchi-shi, Osaka-fu 570-0034 (JP); Morita, Katsuyuki, Hirakata-shi, Osaka-fu 573-1146 (JP)
(74) Representative: Butcher, Ian James

(57) **Abstract**

Disclosed is a data broadcast content preview system for easily and promptly reproducing, for a preview purpose, an accumulation content by linking from a data broadcast content. The system includes a transmitting apparatus and a receiving apparatus. The transmitting apparatus transmits the accumulation content to the receiving apparatus where it is accumulated in a recording medium. The transmission is done without assembling the accumulation content into a transport stream (TS). Next, the transmitting apparatus transmits to the receiving apparatus the broadcast content after assembling into TS. With reference to link information shown by the received data broadcast information, the receiving apparatus specifies the linked destination in the recording medium at which the accumulation content is recorded, and reproduces the accumulation content.

## Description

This application is based on application Nos. 2001-328809 and 2002-064907 filed in Japan, the content of which is hereby incorporated by reference.

### BACKGROUND OF THE INVENTION

### (1) Field of the Invention

The present invention relates to a technique for previewing data broadcast contents to be broadcast additionally to digital broadcast programs in order to check, prior to actual broadcasting, whether the data broadcast contents are properly reproduced.

### (2) Description of the Related Art

Recently, TV broadcasters have newly introduced digital broadcasting in addition to conventional terrestrial broadcasting. With digital broadcasting, data broadcast programs composed of data broadcast contents are simultaneously broadcast with conventional broadcast programs composed of video and audio data.

The "data broadcast content" refers to data groups each composed of, for example, text-code data files (hereinafter, referred to as "BML text files") written in the Markup language, and mono-media data files (hereinafter, referred to as "material files"), such as static images, text, video, and audio. Each of these data groups constitutes a page image to be displayed on the display unit of a receiving apparatus. Further, each BML text file includes a description embedded therein for specifying a procedure to reproduce or display a material file on the page image or a description of a link to another page.

Accordingly, with the digital broadcasting, the broadcasters are able to broadcast additional information that viewer may find interesting, such as information related to a program being broadcast, news, a weather forecast. The viewers are able to acquire additional information, while watching a broadcast program, from data broadcast contents that are simultaneously broadcast with the program.

Generally, the above data broadcast contents are generated off line with the use of, e.g. an authoring tool. To check whether it is properly reproduced prior to actual broadcasting, the broadcaster previews the generated data broadcast content in an environment simulating an actual broadcasting environment that is provided by a preview apparatus.

Since the broadcaster broadcasts the data broadcast contents only after confirming their proper reproduction as above, viewers can receive the data broadcast content with a receiving apparatus, and reproduces, without troubles, the received data broadcast contents to retrieve additional information.

In addition, the broadcasters have recently started to offer a new type of digital broadcasting to further increase the variety and the amount of additional information provided for viewers through digital broadcasting. In the new type of digital broadcasting, a data broadcast program constituted by a data broadcast content is linked to other programs that are constituted by accumulation contents and Web contents. That is to say, it is possible to move from the data broadcast content to any of the accumulation contents and the Web contents, and also to refer to a material file embedded in any of the contents from each of the data broadcast content, the accumulation contents, and the Web contents. (Hereinafter, the new data broadcasting is referred to as "program-linked broadcasting" . ) It is similarly preferable that contents in this program-linked broadcasting are previewed with a preview apparatus to confirm prior to actual broadcasting that they are properly reproduced.

The "accumulation content" is a data group composed of BML text files and/or material files. The data group is: (1) linked to a data broadcast program constituted by a data broadcast content; (2) accumulated in a recording medium prior to broadcasting of the data broadcast content; and (3) reproduced when the data broadcast program is broadcast by being linked from the data broadcast content.

The "Web content" is a data group composed of Web page images. The data group is: (1) linked to a data broadcast content; (2) accumulated in a Web server prior to broadcasting of the data broadcast content; (3) transferred to a receiving apparatus connected to the Web server via the Internet when the data broadcast program is broadcast; and (4) reproduced by the receiving apparatus to provide a program linked to the data broadcast content.

However, there are problems as follows . That is, in order to preview accumulation contents to be broadcast in the above program-linked broadcasting, it is required to accumulate the accumulation contents in the preview apparatus in advance, and then to receive a data broadcast content that is linked to the accumulation content. The accumulation contents are then reproduced for the preview purpose. As above, previewing of accumulation contents requires troublesome and time-consuming operations.

### SUMMARY OF THE INVENTION

In view of the above problems, an object of the present invention is to provide a data broadcast content preview system capable of performing preview an accumulation content with easy and quick operations.

To achieve the object stated above, a data broadcast content preview system of the present invention reproduces, for a preview purpose, data broadcast contents in an environment simulating an actual data broadcasting environment. The data broadcast content preview system includes a transmitting apparatus for transmitting a data broadcast content in a form of a transport stream; and a receiving apparatus for receiving the data broadcast content to reproduce in the simulated environment. Here, the data broadcast content constitutes one broadcast program, and the receiving apparatus has a storage area. The transmitting apparatus includes a content storing unit, a designation receiving unit, a transferring unit, and a transmitting unit. The content storing unit is operable to store (i) a plurality of accumulation contents, (ii) a plurality of attributes each corresponding to an accumulation content and showing a storage location in the storage area at which the accumulation content is to be stored, and (iii) a plurality of data broadcast contents each having link information showing at least one storage location at which an accumulation content to be linked is to be stored. The designation receiving unit is operable to receive designation as to which of the data broadcast contents is to be reproduced. The transferring unit is operable to select, from the accumulation contents stored in the content storing unit, accumulation contents that are to be linked from the designated data broadcast content, and transfer the selected accumulation contents to the receiving apparatus without assembling into a transport stream. The selection and the transfer are performed upon receipt of the designation. The transmitting unit is operable to read, upon completion of the transfer of the selected accumulation contents, the designated data broadcast content from the content storing unit in order to transmit to the receiving apparatus in a form of a transport stream. The receiving apparatus includes a recording unit and a reproducing unit. The recording unit is operable to record each transferred accumulation content in the storage area at the storage location shown by the attribute. The reproducing unit is operable to reproduce the received data broadcast content after decoding, and read to reproduce an accumulation content recorded in the storage area at the storage location shown by the link information included in the data broadcast content.

With this construction, accumulation contents can be recorded in the recording medium without employing a TS assembling operation, and each of the recorded accumulation contents can be reproduced, just as in actual program-linked broadcasting, on demand while a data broadcast content from which the accumulation content is linked is being transmitted. That is to say, previewing of data broadcast content and accumulation contents linked therefrom can be performed with a much easier and quicker operation in comparison with an operation required for actual program-linked broadcasting in which accumulation contents need to be linked from a data broadcast content that is scheduled to be broadcast simultaneously.

Here, the transferring unit may include: a link information extracting subunit operable to analyze the designated data broadcast content in order to extract a storage location shown by the link information; and a judging subunit operable to judge whether the extracted storage location matches a storage location shown by the attribute corresponding to each accumulation content stored in the content storing unit, and the transferring unit selects an accumulation content corresponding to the attribute that matches.

With this construction, by simply designating a data broadcast content, accumulation contents that are linked from the designated data broadcast content can be automatically selected. That is, useless accumulation contents are not stored in the receiving apparatus. Thus, previewing of data broadcast content and accumulation contents linked therefrom is performed with efficient use of the storage area of the receiving apparatus.

Here, each accumulation content stored in the content storing unit may constitute a program that belongs to a program series. The program series is composed of a plurality of, periodically updated programs. Each attribute may show a same storage location in the case where the attribute corresponds to an accumulation content constituting a program that belongs to a same program series. The content storing unit may further store (i) broadcast schedule information and (ii) accumulation content schedule information that includes update information and program series ID information. The broadcast schedule information shows start-time at which broadcasting of each data broadcast content starts. The update information shows end-time at which broadcasting of each accumulation content ends and a number of times that a program constituted by each accumulation content has been updated. The program series ID information uniquely identifies a program series to which a program constituted by each accumulation content belongs. The transferring unit may further include a start-time specifying subunit, a first selection subunit, and a second selection subunit. The start-time specifying subunit is operable to specify, with reference to the broadcast schedule information, start-time at which broadcasting of the designated data broadcast content starts. The first selection subunit is operable to select, from the accumulation contents stored in the content storing unit, accumulation contents of which end-time shown by the accumulation content schedule information is within a predetermined period prior to the specified start-time of the designated data broadcast content. The second selection subunit is operable to select, from the accumulation contents selected by the first selection subunit, an accumulation content having a largest number of update times among accumulation contents each constituting a program that belongs to a same program series. The second selection is made with reference to the accumulation content schedule information. The judging subunit may judge whether the extracted storage location matches a storage location shown by each attribute corresponding to an accumulation content that is selected by the second selection subunit.

Alternatively, each accumulation content stored in the content storing unit may constitute a program that belongs to a program series. The program series is composed of a plurality of, periodically updated programs. Each attribute may show a same storage location in the case where the attribute corresponds to an accumulation content constituting a program that belongs to a same program series. The accumulation content schedule information may further include update information and program series ID information. The update information shows a number of times that a program constituted by each accumulation content has been updated. The program series ID information uniquely identifies a program series to which a program constituted by each accumulation content belongs. The first selection subunit may further select, from the accumulation contents that are already selected by the first selection subunit, an accumulation content having a largest number of update times among accumulation contents each constituting a program that belongs to a same program series. The further selection by the first selection subunit is made with reference to the accumulation content schedule information.

Alternatively, each accumulation content stored in the content storing unit may constitute a program that belongs to a program series. The program series is composed of a plurality of, periodically updated programs. Each attribute may show a same storage location in the case where the attribute corresponds to an accumulation content constituting a program that belongs to a same program series. The content storing unit may further store (i) broadcast schedule information and (ii) accumulation content schedule information that includes update information and program series ID information. The broadcast schedule information shows start-time at which broadcasting of each data broadcast content starts. The update information shows end-time at which broadcasting of each accumulation content ends and a number of times that a program constituted by each accumulation content has been updated. The program series ID information uniquely identifies a program series to which a program constituted by each accumulation content belongs. The transferring unit may further include a start-time specifying subunit, a first selection subunit, and a second selection subunit. The start-time specifying subunit is operable to specify, with reference to the broadcast schedule information, start-time at which broadcasting of the designateddata broadcast content starts. The first selection subunit is operable to select, from the accumulation contents stored in the content storing unit, accumulation contents of which end-time shown by the accumulation content schedule information is within a predetermined period prior to the specified start-time of the designated data broadcast content. The second selection subunit is operable to select, from the accumulation contents selected by the first selection subunit, an accumulation content having a largest number of update times among accumulation contents each constituting a program that belongs to a same program series. The second selection is made with reference to the accumulation content schedule information.

With any of the constructions, an accumulation content that is the latest version at the time of broadcasting a designated data broadcast program can be automatically selected from accumulation contents each constituting a program that belongs to a same program series. Thus, previewing is performed in an environment reflecting an actual broadcasting environment in which each program series constituted by periodically updated accumulation contents differs in the substance depending on the broadcasting time.

Here, the accumulation content schedule information may further include broadcast area information showing a broadcast area for which each accumulation content is to be broadcast. The recording unit may further record, in the storage area, setting information showing a predetermined broadcast area. The second selection subunit may further select, from the accumulation contents already selected by the second selection subunit, accumulation contents of which broadcast area shown by the broadcast area information includes the broadcast area shown by the setting information.

Alternatively, the content storing unit may further store (i) broadcast schedule information and (ii) accumulation content schedule information that includes broadcast area information. The broadcast schedule information shows start-time at which broadcasting of each data broadcast content starts. The broadcast area information shows end-time at which broadcasting of each accumulation content ends and a broadcast area for which each accumulation content is to be broadcast. The recording unit may further record, in the storage area, setting information showing a predetermined broadcast area. The transferring unit may further include a start-time specifying subunit, a first selection subunit, and a second selection subunit. The start-time specifying subunit is operable to specify, with reference to the broadcast schedule information, start-time at which broadcasting of the designated data broadcast content starts. The first selection subunit is operable to select, from the accumulation contents stored in the content storing unit, accumulation contents of which end-time shown by the accumulation content schedule information is within a predetermined period prior to the specified start-time of the designated data broadcast content. The second selection subunit is operable to select, from the accumulation contents selected by the first selection subunit, accumulation contents of which broadcast area shown by the broadcast area information includes the broadcast area shown by the setting information.

With any of the constructions, the receiving apparatus does not store any accumulation contents that are not stored, in the actual program-linked broadcasting, by a receiving apparatus located at a specific area in accordance with the broadcast areas for which each accumulation content is scheduled to be broadcast. Thus, preview can be performed just as in the actual broadcasting environment that differs depending on each broadcast area.

Here, the data broadcast content preview system may further include a Web server for storing Web contents. The content storing unit may further store (i) a plurality of Web contents, (ii) Web content schedule information showing a valid period of each Web content, and (iii) a plurality of attributes each corresponding to a Web content and showing a storage location in the Web server at which the Web content is to be stored. Each data broadcast content stored in the content storing unit may have second link information showing at least one storage locations at which a Web content to be linked is to be stored. The transferring unit may further include a Web content selection subunit operable to select, from the Web contents stored in the content storing unit, Web contents of which valid period begins before and ends after the specified start-time of the designated data broadcast content. The selection is performed upon receipt of the designation of the data broadcast content. The transferring unit may further transfer each selected Web content to the storage location shown by the attribute. The transmitting unit may perform the transmission of the designated broadcast content upon completion of the transfer of the selected Web contents. The receiving apparatus may further include an acquisition unit operable to access the Web server in order to acquire a Web content stored at the storage location shown by the second link information. The second link information is included in the data broadcast content reproduced by the reproducing unit. The reproducing unit may further reproduce each acquired Web content.

With this construction, the data transmitting apparatus can selectively transfer, to the Web server, only the Web contents that are validat the time when actual broadcasting of a designated data broadcast content is scheduled. Thus, preview of data broadcast content along with accumulation contents and Web contents can be efficiently performed without transmitting useless Web contents.

Here, the judging subunit may further judge whether the extracted storage location matches a storage location shown by the attribute corresponding to each selected Web content. The Web content selection subunit may select a Web content corresponding to the attribute that matches.

Alternatively, the data broadcast content preview system may further include a Web server for storing Web contents. The content storing unit may further store (i) a plurality of Web contents, and (ii) a plurality of attributes each corresponding to a Web content and showing a storage location in the Web server at which the Web content is to be stored. Each data broadcast content stored in the content storing unit may have second link information showing at least one storage location at which a Web content to be linked is to be stored. The judging subunit may further judge whether the extracted storage location matches a storage location shown by the attribute corresponding to each Web content stored in the content storing unit. The transferring unit may further include a Web content selection subunit operable to select, from the Web contents stored in the content storing unit, Web contents corresponding to the attribute that matches. The transferring unit further transmits the selected Web content to the Web server. The transmitting unit may perform the transmission of the designated broadcast content upon completion of the transfer of the selected Web contents. The receiving apparatus may further include an acquisition unit operable to access the Web server in order to acquire a Web content stored at the storage location shown by the second link information. The second link information is included in the data broadcast content reproduced by the reproducing unit. The reproducing unit may further reproduce each acquired Web content.

With any of the constructions, only Web contents that are to be linked from a designated data broadcast content can be automatically selected. Consequently, the time required to transfer the selected Web contents is minimized.

Here, the transferring unit may further include a page content generating subunit operable to generate a page content based on an attribute of each finally selected accumulation content and an attribute of each selected Web content. The page content functions to display a selection page used to receive, via GUI, a user input selecting a storage location at which one of the accumulation contents and the Web contents is stored. The transferring unit may transfer the generated page content to the receiving apparatus. The recording unit may further record the transferred page content in the storage area. The reproducing unit may further reproduce the recorded page content at a start of previewing.

Alternatively, the transferring unit may further include a page content generating subunit operable to generate a page content based on an attribute of each finally selected accumulation content. The page content functions to display a selection page used to receive, via GUI, a user input selecting a storage location at which one of the accumulation contents is stored. The transferring unit may transfer the generated page content to the receiving apparatus. The recording unit may further record the transferred page content in the storage area. The reproducing unit may further reproduce the recorded page content at a start of previewing.

With any of the constructions, a content to be previewed can be selected via GUI at the start of previewing. Thus, accumulation contents and/or Web contents can be directly previewed without reproducing the data broadcast content from which the accumulation contents and the Web contents are linked.

Here, the storage area may include a hard disk and a nonvolatile RAM. The hard disk is for storing the page content. The nonvolatile RAM is for storing a location-specifying content that includes a script showing a storage location within the hard disk at which the page content is stored. The reproducing unit may read, at the start of previewing, the location-specifying content stored in the nonvolatile RAM to specify the storage location at which the page content is stored, and read the page content from the specified storage location to reproduce.

With this construction, it is not necessary to store a page content in the nonvolatile RAM each time the page content is generated, and the page content is still read from the hard disk via the nonvolatile RAM and reproduced. This leads to suppress wearing of the nonvolatile RAM that is inevitably caused by repeatedly performing read and write operations.

Here, the content storing unit may further store broadcast schedule information and accumulation content schedule information. The broadcast schedule information shows start-time at which broadcasting of each data broadcast content starts, and the accumulation content schedule information shows end-time at which broadcasting of each accumulation content ends . The transferring unit may generate, each time when transferring a selected accumulation content to the receiving apparatus, accumulation content ID information identifying the accumulation content, and transfer the accumulation content ID information to the receiving apparatus. The recording unit may further record the accumulation content ID information in the storage area. The transferring unit may further include a start-time specifying subunit, a first selection subunit, and a second selection subunit. The start-time specifying subunit is operable to specify, with reference to the broadcast schedule information, start-time at which broadcasting of the designated data broadcast content starts. The first selection subunit is operable to select, from the accumulation contents stored in the content storing unit, accumulation contents of which end-time shown by the accumulation content schedule information is within a predetermined period prior to the specified start-time of the designated data broadcast content. The second selection subunit is operable to select accumulation contents with reference to the accumulation content ID information, the selection being preformed by excluding, from the accumulation contents selected by the first selection subunit, accumulation contents that have been stored in the storage area.

With this construction, the transmitting apparatus can selectively transmit, to the receiving apparatus, the selected accumulation contents after excluding therefrom the accumulation contents that have been already stored in the receiving apparatus. Thus, when a plurality of data broadcast contents are sequentially transmitted, accumulation contents that are commonly linked from the plurality of data broadcast contents are not redundantly transmitted to the receiving apparatus, whereby unnecessary operation is eliminated.

Alternatively, the object of the present invention is achieved by a data broadcast content preview system for reproducing, for a preview purpose, data broadcast contents in an environment simulating an actual data broadcasting environment. The data broadcast content preview system includes: a transmitting apparatus for transmitting a data broadcast content in a form of a transport stream; and a receiving apparatus for receiving the data broadcast content to reproduce in the simulated environment. Here, the data broadcast content constitutes one broadcast program, and the receiving apparatus has a storage area. The transmitting apparatus includes a content storing unit, a designation receiving unit, a transferring unit, and a transmitting unit. The content storing unit is operable to store (i) a plurality of accumulation contents each to be stored in the storage area, (ii) project information generated for each data broadcast content, each piece of project information showing a storage location at which an accumulation content linked from the data broadcast content is currently stored and a storage location at which the accumulation content is to be stored in the storage area, and (iii) a plurality of data broadcast contents each having link information showing at least one storage location at which an accumulation content to be linked is to be stored. The designation receiving unit is operable to receive designation as to which of the data broadcast contents is to be reproduced. The transferring unit is operable to select, from the accumulation contents stored in the content storing unit, accumulation contents to be linked from the designated data broadcast content, and transfer the selected accumulation contents to the receiving apparatus without assembling into a transport stream. The selection is performed with reference to the project information, and the selection and the transfer are performed upon receipt of the designation. The transmitting unit is operable to read, upon completion of the transfer of the selected accumulation contents, the designated data broadcast content from the content storing unit in order to transmit to the receiving apparatus in a form of a transport stream. The receiving apparatus includes a recording unit, and a reproducing unit. The recording unit is operable to record each transferred accumulation content in the storage area at the storage location shown by the attribute. The reproducing unit is operable to reproduce the received data broadcast content after decoding, and read to reproduce an accumulation content recorded in the storage area at the storage location shown by the link information included in the data broadcast content.

With this construction, accumulation contents that are linked from a designated broadcast content can be specified based on the project information, so that the only accumulation contents linked from the designated broadcast content are transferred to, and stored by the receiving apparatus. Thus, the storage area of the receiving apparatus is efficiently utilized.

Here, the content storing unit may further store a plurality of Web content each linked from a data broadcast content. The data content preview system may further include a Web server for storing Web contents. The project information may further include information specifying a storage location at which a Web content linked from a data broadcast content is currently stored, and a storage location within the Web server at which the Web content is to be stored. The transferring unit may select, from the Web contents stored in the content storing unit, Web contents linked from the designated data broadcast content, and read from the content storing unit each selected Web content to transfer to the storage location in the Web server. The selection and the transfer are performed with reference to the project information corresponding to the designated data broadcast program.

With this construction, Web contents that are linked from a designated broadcast content can be specified based on the project information, so that the time required for transferring the selected Web contents is minimized.

Here, the transferring unit may further include a page content generating subunit operable to generate a page content based on the project information. The page content functions to display a selection page used to receive, via GUI, a user input selecting a storage location at which one of the Web contents is stored. The transferring unit may transfer the generated page content to the receiving apparatus. The recording unit may record the transferred page content in the storage area. The reproducing unit may further reproduce, at a start of previewing, the recorded page content.

With this construction, a content to be previewed can be selected via GUI at the start of previewing. Thus, accumulation contents and/or Web contents can be directly previewed without reproducing the data broadcast content from which the accumulation contents and the Web contents are linked.

Here, the storage area may include a hard disk and a nonvolatile RAM. The hard disk is for storing the page content and the nonvolatile RAM is for storing a location-specifying content that includes a script showing a storage location within the hard disk at which the page content is stored. The reproducing unit may read, at the start of previewing, the location-specifying content stored in the nonvolatile RAM to specify the storage location at which the page content is stored, and read the page content from the specified storage location to reproduce.

With this construction, it is not necessary to store a page content in the nonvolatile RAM each time the page content is generated, and the page content is still read from the hard disk via the nonvolatile RAM and reproduced. This leads to suppress wearing of the nonvolatile RAM that is inevitably caused by repeatedly performing read and write operations.

### BRIEF DESCRIPTION OF THE DRAWINGS

These and the other objects, advantages and features of the invention will become apparent from the following description thereof taken in conjunction with the accompanying drawings which illustrate a specific embodiment of the invention.

In the drawings:
FIG. 1 is a block diagram showing the construction of a data broadcast content preview system 100;
FIG. 2 is a view showing one example of an attribute;
FIG. 3 is a view showing one example of a broadcast content schedule;
FIG. 4 is a view showing one example of an accumulation content schedule;
FIG. 5 is a view showing one example of a Web content schedule;
FIG. 6 is a view showing one example of user management information;
FIG. 7 is a block diagram showing the construction of a data broadcast receiving apparatus 116;
FIG. 8 is a view showing accumulation contents recorded onto a recording medium 1163 in a multilevel hierarchy of directories;
FIG. 9 is a view showing one example of a preview content selection page;
FIG. 10 is a view showing one example of a first page content;
FIG. 11 is a flowchart showing the process sequence from a content registering operation to a previewing operation;
FIG. 12 is a flowchart showing the sequence of an accumulation content registering operation;
FIG. 13 is a flowchart showing the sequence of the Web content registering operation;
FIG. 14 is a flowchart showing the sequence of the content previewing operation;
FIG. 15 is a view showing one example of a BML text included in a data broadcast content;
FIG. 16 is a block diagram showing the construction of a data broadcast content preview system 200 according to an embodiment 2;
FIG. 17 is a flowchart showing the operation performed by a control unit 212 for a final selection;
FIG. 18 is a block diagram showing the construction of a data broadcast content preview system 300 according to an embodiment 3;
FIG. 19 is a view showing one example of project information;
FIG. 20 is a view showing one example of content management information;
FIG. 21 is a flowchart showing a content registering operation performed by a control unit 312; and
FIG. 22 is a view conceptually illustrating operations for reading a first page content from the linked storage location to reproduce.

### DESCRIPTION OF THE PREFERRED EMBODIMENT

The following describes preferred embodiments of the present invention.

### EMBODIMENT 1

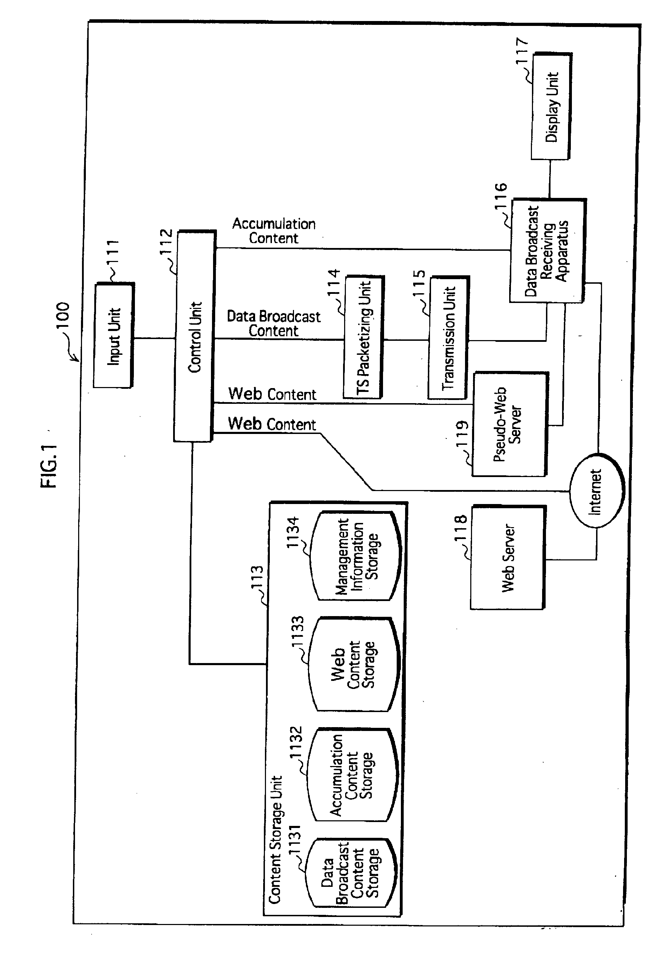

FIG. 1 is a block diagram showing the construction of a data broadcast content preview system 100 according to an embodiment 1 of the present invention. The preview system 100 is composed of an input unit 111, a control unit 112, a content storage unit 113, a TS packetizing unit 114, a transmission unit 115, a data broadcast receiving apparatus 116, a display unit 117, a Web server 118, and a pseudo-Web server 119.

The preview system 100 is composed of hardware components, such as CPU, ROM, RAM, a hard disk, and a decoder. The ROM or the hard disk stores a computer program. The preview system 100 performs its function by the CPU operating under the computer program.

The input unit 111 receives a user input and outputs the received input to the control unit 112.

For example, the input unit 111 receives various inputs, such as an instruction directing to activate the preview system, a user ID, an instruction specifying a data broadcast content to preview, a selection of an accumulation content, a selection of a Web content, an instruction directing to start previewing, and an instruction directing to terminate previewing.

The content storage unit 113 includes a data broadcast content storage 1131, an accumulation content storage 1132, a Web content storage 1133, and a management information storage 1134.

The data broadcast content storage 1131 stores data broadcast contents, and each broadcast content is stored with its attribute in the same directory.

Each data broadcast content stored in the data broadcast content storage 1131 includes link information. The link information shows a linked destination for at least one of the accumulation contents stored in the accumulation content storage 1132 or the Web contents stored in the Web content storage 1133.

Here, the "linked destination" is a piece of information specifying a storage location at which the accumulation content or the Web content is to be stored in the data broadcast receiving apparatus 116, the Web server 118, or in the pseudo-Web server 119.

The accumulation content storage 1132 stores accumulation contents, and each accumulation content is stored with its attribute in the same directory.

The Web content storage 1133 stores Web contents, and each Web content is stored with its attribute in the same directory.

In this embodiment and other embodiments that follow, a data broadcast content makes up one program together with an accumulation content, and/or a Web content, and each program belongs to a program series made up of a plurality of, periodically updated programs.

The "attribute of a content" is a piece of information that is separately generated for each of the data broadcast contents, the accumulation contents, and the Web contents, and that includes a destination location, a series ID, an episode number, a valid period, a program series title, and a source location of the content.

The "destination location" is a path specifying a linked destination where the content is to be transferred or transmitted.

The "series ID" is an identifier for identifying the program series to which the program constituted by the content belongs. The accumulation contents bearing the same series ID have the same destination location, so that there always is one accumulation content stored at the destination location. Thus, when an accumulation content is transferred to one destination location, the accumulation content currently stored at the destination location is overwritten with the newly transferred accumulation content. The same description applies to the Web contents.

The "episode number" is the number showing the version of the program constituted by the content. For example, the latest version among a plurality of programs each having the same series ID is the one bearing the largest episode number.

The "valid period" is a period during which the content is valid.

The "program series title" is the title of the program series to which the program constituted by the content belongs.

The "source location" is the storage location showing where in the content storage unit 113 each resource file constituting the content is stored.

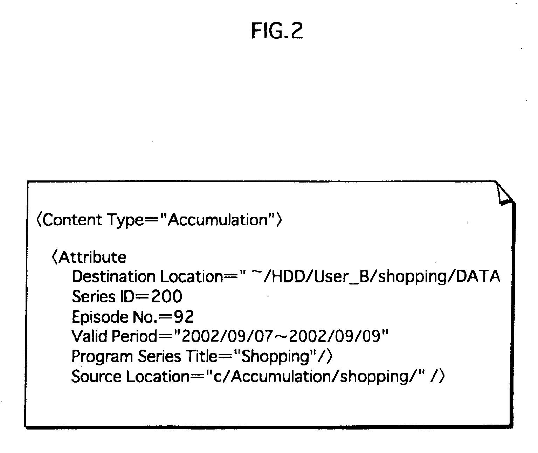

FIG. 2 shows one example of the attribute.

The management information storage 1134 stores a broadcast content schedule, an accumulation content schedule, a Web content schedule, and user management information.

Here, the "broadcast content schedule" is information on a broadcasting date, an event ID, a broadcasting start-time and airtime, i.e., a period of time during which the data broadcast content is broadcast, of each data broadcast content. The broadcast content schedule also includes information on a title of the program series to which the program constituted by each content belongs.

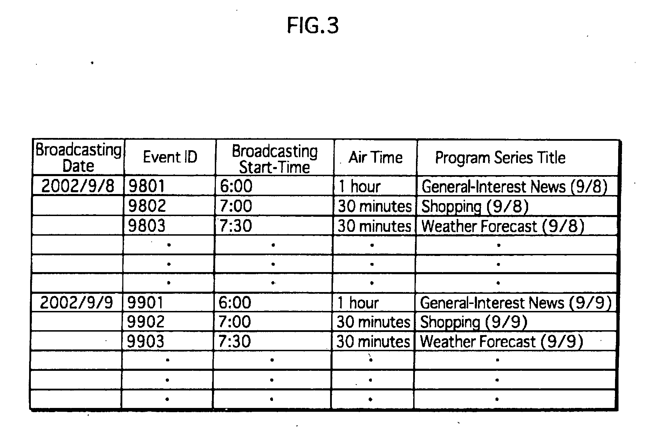

The "event ID" is an identifier uniquely identifies a data broadcast content. FIG. 3 shows one example of the broadcast content schedule.

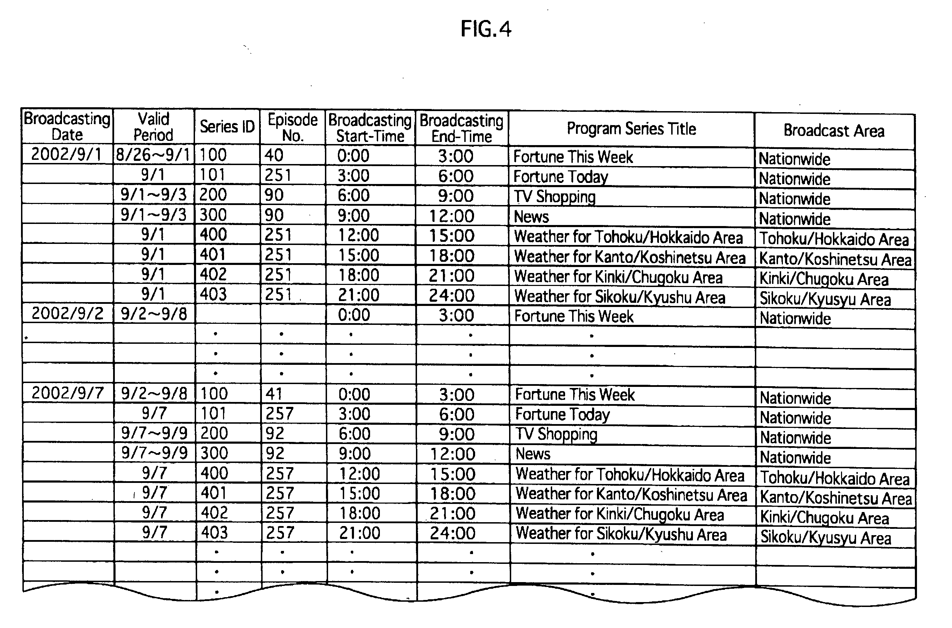

The "accumulation content schedule" is information on a broadcasting date, a valid period, a series ID, an episode number, a broadcasting start-time and a broadcasting end-time of each accumulation content. The accumulation content schedule also includes information on a title of the program series to which the program constituted by each accumulation content belongs, and an area where the accumulation content is to be broadcast for. FIG. 4 shows one example of the accumulation content schedule.

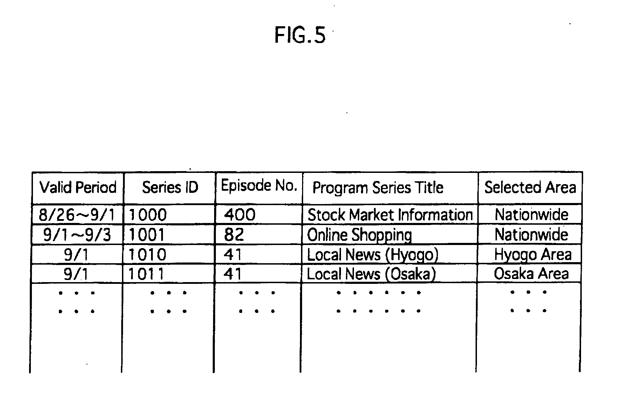

The "Web content schedule" is information on a valid period, and a series ID, an episode number of each Web content. The Web content schedule also includes a title of the program series to which the program constituted by each content belongs. FIG. 5 shows one example of the Web content schedule.

The "user management information" is information regarding registered users of the preview system 100, and shows, for each user, the user name, and the authority level granted for the user, the path specifying the storage location within the data broadcast receiving apparatus 116 or the Web server 118 that the user is permitted to use.

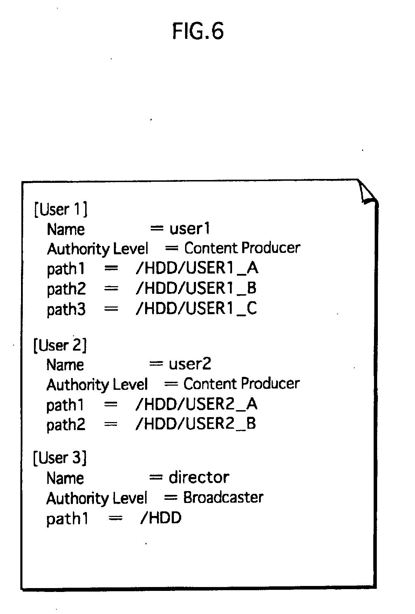

FIG. 6 shows one example of the user management information . As shown in FIG. 6, each user has assigned according to the authority level a path (indicated as path1, path2, or path3 in the figure) that is available for the user.

The TS packetizing unit 114 first encodes the data broadcast content that is repeatedly outputted from the control unit 112 into variable length data called section, and then divides the section into a fixed length packet called TSP (transport streampacket), followed by output to the transmission unit 115. (Hereinafter, the above operation to assemble into TSP is referred to as "TS packetizing")

The transmission unit 115 transmits to the data broadcast receiving apparatus 116 the data broadcast content that has been TS packetized. Here, the data broadcast content may be transmitted to the data broadcast receiving apparatus 116 after multiplexing with separate video data TS and audio data TS.

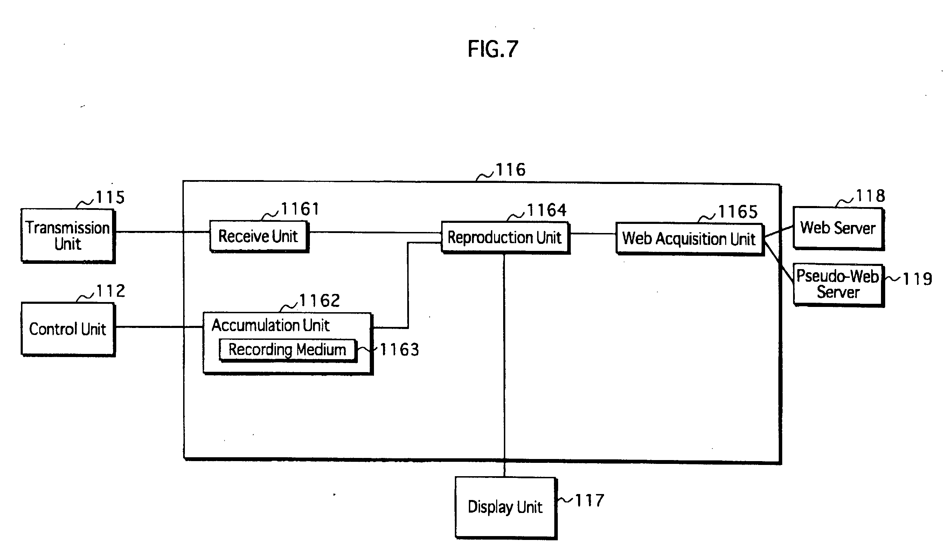

The data broadcast receiving apparatus 116 is composed of CPU, RAM, ROM, a hard disk, and a decoder. FIG. 7 is a block diagram showing the construction of the data broadcast receiving apparatus 116.

The data broadcast receiving apparatus 116 is composed of a receive unit 1161, an accumulation unit 1162, a recording medium 1163, and a reproduction unit 1164, and a Web acquisition unit 1165.

The receive unit 1161 receives from the transmission unit 115 the TS corresponding to the data broadcast content, and outputs the TS to the reproduction unit 1164.

The accumulation unit 1162 includes the recording medium 1163. The accumulation unit 1162 receives from the control unit 112 the accumulation content that is collectively transferred on a module-by-module basis as one folder, and records the received accumulation content as one folder onto the recording medium 1163 together with accumulation content information regarding the accumulation content. The recording medium 1163 is a large capacity, rewritable recording medium, such as a hard disk, DVD-RAM, CD-RW, and a semiconductor memory.

The "module" is a component constituting the accumulation content, and includes, for example, a BML text file or a material file. In other words, the module is a collection of data that is a logical unit to be transmitted in data broadcast transmission or reception by a broadcast receiving apparatus.

The "accumulation content information" is a piece of information generated by the control unit 112 for each accumulation content each time it is transferred by the control unit 112. The accumulation content information shows a storing date, a series ID, and an episode ID of a corresponding accumulation content.

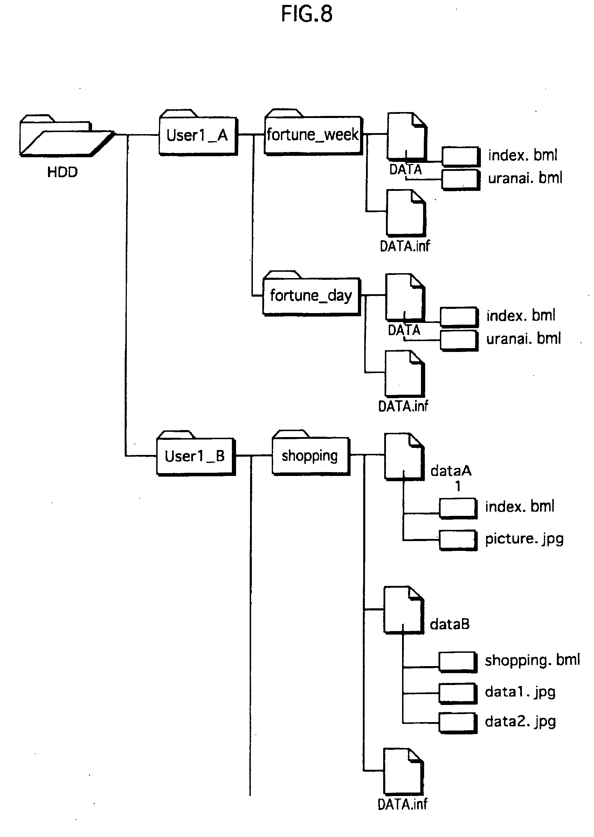

FIG. 8 is a view showing the accumulation contents recorded onto the recording medium 1163 in a multilevel hierarchy of directories.

In FIG. 8, resource files constituting an accumulation content are collectively stored on a module-by-module basis in a corresponding folder, such as "DATA", "dataA", "dataB", which in turn contained in a directory, such as "fortune_week", "fortune_day" and "shopping".

For example, the directory "shopping" contains two folders "dataA" and "dataB" each of which further contains resource files constituting modules of the accumulation content. To be more specific, the "dataA" folder contains resource files, "index.bml" and "picture.jpg", and the "dataB" folder contains resource files, "shopping.bml", "data1.jpg" and "data2.jpg".

In addition, the directories named "fortune_week", "fortune_day" and "shopping" each contain a "DATA.inf" file in which the accumulation content information of the accumulation content is contained.

The recording medium 1163 stores a transferred accumulation content and corresponding accumulation content information in a same directory.

In addition, the recording medium 1163 stores, at a predetermined storage location, information on setting as to which area the broadcast service is to be provided for (hereinafter referred to as "setting information"). The setting information is set in advance by the user, and "Kinki" area is selected as the broadcast service area in this specific example.

The Web acquisition unit 1165 acquires a Web content from the Web server 118 or the pseudo-Web server 119, and outputs the acquired Web content to the reproduction unit 1164.

Selection as to which of the two Web servers a Web content is to be acquired from may be made in the initial setting or may be instructed by the user at the time of performing acquisition.

The reproduction unit 1164 decodes the TS packetized data broadcast content that is inputted from the receive unit 1161 to reproduce the decoded data broadcast content on the display unit 117.

In addition, the reproduction unit 1164 reads an accumulation content from the recording medium 1163, and reproduces the read accumulation content onto the display unit 117.

Further, the reproduction unit 1164 reproduces a Web content acquired from the Web acquisition unit 1165 onto the display unit 117.

The display unit 117 displays the accumulation content and the Web content that are inputted from the reproduction unit 1164.

The Web server 118 includes a memory, is connected to the data broadcast receiving apparatus 116 via the Internet, and stores a Web content transferred from the control unit 112 to the memory.

The pseudo-Web server 119 includes a memory, is connected directly to the data broadcast receiving apparatus 116 bypassing the Internet, and stores a Web content transferred from the control unit 112 to the memory.

The control unit 112 controls operations of the preview system 100. To be more specific, the control unit 112 operations for activating the preview system 100, registering a content, previewing a content, and terminating previewing.

First, description is given to the activating operation. The input unit 111 receives an instruction directing to activate the preview system 100 and a user ID (a user name, in this case), and outputs the received input to the control unit 112. In response, the control unit 112 reads the user management information from the management information storage 1134 to determine whether the inputted user ID matches any of the user IDs recorded in the user management information. When there is a match, the control unit 112 connects the data broadcast receiving apparatus 116 to the Web server 118 or to the pseudo-Web server 119.

Note that the connection of the data broadcast receiving apparatus 116 to the Web server 118 or to the pseudo-Web server 119 is not necessarily made at the time of activation. Instead, the connection may be made later when necessary.

Here, whether to connect to the Web server 118 or to the pseudo-Web server 119 may be determined in advance, or it may be determined according to a user instruction given at the time of activation.

Next, description is given to the content registering operation. The control unit 112 performs two types of registering operations: One is accumulation content registering and the other is Web content registering. First, the accumulation content registering operation is described.

The input unit 111 receives an event ID inputted by a user to specify a data broadcast content to preview, and outputs to the control unit 112 the inputted event number. In response, the control unit 112 reads from the management information storage 1134 the broadcast content schedule and the accumulation content schedule, and further reads from the recording medium 1163 the setting information and all the pieces of accumulation content information recorded therein.

With reference to the read broadcast content schedule, the control unit 112 specifies the broadcasting date and the broadcasting start-time of the data broadcast content that corresponds to the inputted event ID. Next, with reference to the read accumulation content schedule, the control unit 112 selects accumulation contents scheduled to be broadcast within a predetermined period (e.g. seven days) prior to the broadcasting start-time and the broadcasting date specified above (hereinafter, this selection is referred to as the "first selection"). Also with reference to the accumulation content schedule information, the control unit 112 then selects, from among the accumulation contents selected in the first selection, accumulation contents each bearing a largest episode number of all the accumulation contents with a same series ID (hereinafter, this selection is referred to as the "second selection").

In the case where there is only one accumulation content having a certain series ID, that accumulation content is selected.

Further, with reference to the accumulation content schedule, the control unit 112 selects, from among the accumulation contents selected in the second selection, accumulation contents of which broadcasting area includes the broadcasting area ("Kinki" area in this case) specified in the setting information (hereinafter, this selection is referred to as the "third selection"). Still further, the control unit 112 selects from among the accumulation contents selected in the third selection, accumulation contents other than the ones of which series ID and episode number both match those indicated in any pieces of the accumulation content information. That is to say, to be selected in this selection is only accumulation contents that have not yet been recorded in the recording medium 1163. (Hereinafter, this selection is referred to as the "final selection".)

The control unit 112 reads an attribute of each accumulation content stored in the accumulation content storage 1132 one by one to see whether both the series ID and the episode number indicated in the read attribute match those of any of the accumulation contents selected in the final selection. If they match, the control unit 112 then reads all the resource files corresponding to the matching accumulation content from the accumulation content storage 1132, and transfers the read rescore files to the accumulation unit 1162 to store the thus transferred resource files in the recording medium 1163. The storage location within the accumulation content storage 1132 where each resource file is stored is specified by the path to the source location indicated in the attribute of the matching accumulation content, and the storage location within the recording medium 1163 where each read resource file is to be stored is specified by the path to the destination location also indicated in the attribute of the matching accumulation content.

Here, it is applicable, at the time when a newly selected accumulation content is transferred, to delete from the recording medium 1163 all the accumulation contents that have been stored. This arrangement is effective to eliminate undesirable influence on preview that may be caused by accumulation contents irrelevant to the selected data broadcast content remain undeleted in the recording medium 1163.

Further, the control unit 112 generates a piece of accumulation content information for each accumulation content at the time of transferring the accumulation content, and stores the thus generated piece of accumulation content information in the same directory with the accumulation content. The accumulation content information shows a storing date, a series ID, and an episode ID of the accumulation content.

Now, description is given to the operation performed by the control unit 112 for registering a Web content. First, the control unit 112 reads the Web content schedule from the management information storage 1134. With reference to the read Web content schedule, the control unit 112 then selects Web contents of which valid period begins before, and ends after the broadcasting start-time of the selected data broadcast content.

Here, it may be applicable to read an attribute of all the Web contents stored in the Web content storage 1133 instead of the Web content schedule, so that the above selection may be made with reference to the read attributes.

Next, the control unit 112 reads an attribute of each Web content stored in the Web content storage 1133 one by one to see whether both the series ID and the episode number indicated in the read attribute match those of any of the selected Web contents. If they match, the control unit 112 then reads from the Web content storage 1133 all the resource files corresponding to the matching Web content, and transfers the read resource files to the Web server 118 or the pseudo-Web server 119 to store the thus transferred resource files in the memory. The directory of the Web content storage 1133 in which each resource file is stored is specified by the path to the "source location" indicated in the attribute of the matching Web content, and the storage location in the memory where the read resource file is to be stored is specified by the path to the destination location also indicated in the attribute of the matching Web content. Here, it is applicable, at the time when a newly selected Web content is transferred, to delete from the memory of the Web server 118 or of the pseudo-Web server 119 all the Web contents that have been stored. This arrangement is effective to eliminate undesirable influence on preview that may be caused by Web contents irrelevant to the selected data broadcast content remain undeleted in the memory.

Note that the accumulation content registering operation described above may be performed in the similar manner to the Web content registering operation. In this case, the description is given by the above description for the Web content registering provided that the "Web content storage 1133" appearing therein is replaced by the "accumulation content storage 1132" and the "Web content" is replaced by the "accumulation content".

Next, description is given to the operation for content previewing. In response to an input from the input unit 111 directing to start previewing, the control unit 112 repeatedly reads from the data broadcast content storage 1131 the data broadcast content that is selected through the content registering operation, outputs the read data broadcast content to the TS packetizing unit 114, and directs the reproduction unit 1164 to start previewing.

Lastly, the operation for terminating previewing is described. In response to an input from the input unit 111 directing to terminate previewing, the control unit 112 terminates the preview of content.

Note that the operation for new content registering may be prohibited while preview is being performed.

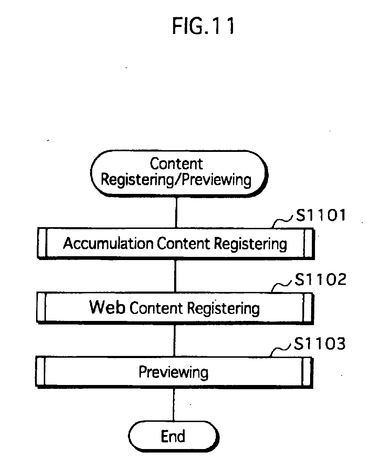

Now, description is given to the process sequence from the content registering operation to the previewing operation. FIG. 11 is a flowchart showing the above sequence.

The control unit 112 sequentially performs the operation for accumulation content registering (step S1101), the operation for the Web content registering (step S1102), and the operation for previewing (step 1103) in the stated order. Note that the operation for accumulation content registering may be preceded by the operation for Web content registering.

Hereinafter, description is given in detail to the operation for accumulation content registering (step S1101), the operation for Web content registering (step S1102), and the operation for previewing (step 1103) with reference to flowcharts.

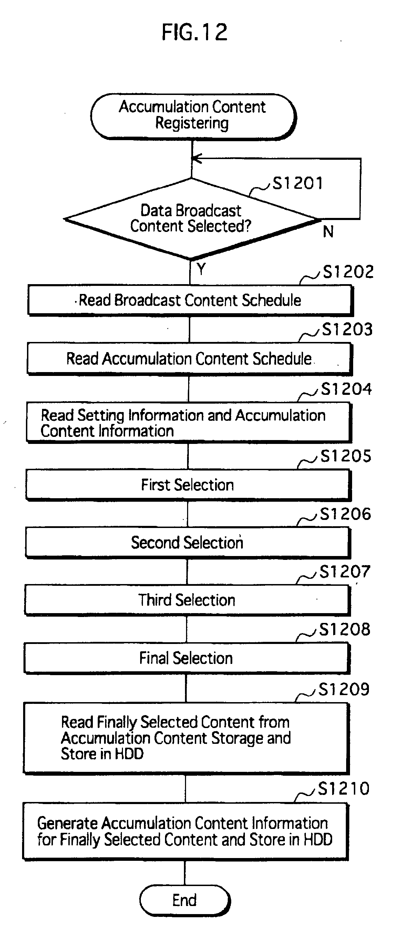

FIG. 12 is a flowchart showing the sequence of the accumulation content registering operation. Hereinafter, with reference to FIG. 12, description is given to the accumulation content registering operation.

When receiving from the input unit 111 an input selecting a data broadcast content for preview (step S1201:Y), the control unit 112 reads from the management information storage 1134 the broadcast content schedule (step S1202) as well as the accumulation content schedule (step S1203). The control unit 112 further reads from the recording medium 1163 the setting information as well as all the pieces of the accumulation content information recorded therein (step S1204).

With reference to the broadcasting date and the broadcasting end-time indicated in the read accumulation content schedule, the control unit 112 makes the first selection from among all the accumulation contents indicated in the read accumulation content schedule (step S1205), and further makes the second selection by selecting, from among the accumulation contents selected in the first selection, accumulation contents each having a largest episode number among accumulation contents having a same series ID (step S1206). The control unit 112 further makes the third selection by selecting, from among the accumulation contents selected in the second selection, accumulation contents of which broadcasting area includes the broadcasting area ("Kinki" area) indicated in the setting information (step S1207). The control unit 112 further makes the final selection by selecting, from among the accumulation contents selected in the third selection, accumulation contents other than the accumulation content that have been already recorded in the recording medium 1163 (step S1208). To this end, the control unit 112 compares the series ID and the episode number of each accumulation content selected in the third selection with those indicated in any piece of the read accumulation content information. If they match, it is determined that the matching accumulation content has already been recorded in the recording medium and thus excluded from the final selection.

Next, the control unit 112 reads from the accumulation content storage 1132 all the resource files corresponding to each accumulation content selected in the final selection, and transfers the read resource files to the accumulation unit 1162 to store the thus transferred files in the recording medium 1163 (step S1209). Here, the storage location within the accumulation content storage 1132 where each resource file is stored is specified by the path to the "source location" indicated in the attribute of the accumulation content, and the "storage location" in the recording medium 1163 where the read resource file is to be stored is specified by the path to the destination location also indicated in the attribute of the accumulation content. Next, the control unit 112 generates a piece of accumulation content information showing the storing date, the series ID, the episode number of for each accumulation content transferred, and stores the thus generated piece of accumulation content information in the same directory with the accumulation. content is stored (step S1210).

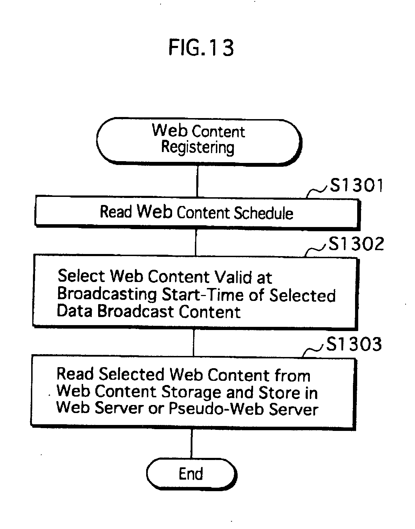

FIG. 13 is a flowchart showing the sequence of the Web content registering operation. Hereinafter, the description is given to the sequence of the Web content registering operation with reference to the flowchart in FIG. 13.

Following to the step S1210 shown in FIG. 12, the control unit 112 reads the Web content schedule from the management information storage 1134 (step S1301). With reference to the read Web content schedule, the control unit 112 then selects Web contents of which valid period begins before, and ends after the broadcasting start-time of the selected data broadcast content (step S1302). Next, the control unit 112 reads an attribute of each Web content stored in the Web content storage 1133 one by one to see whether both the series ID and the episode number indicated in the read attribute match those of any of the selected Web content. If they match, the control unit 112 then reads from the Web content storage 1133 all the resource file corresponding to the matching Web content, and transfers the read resource files to the Web server 118 or to the pseudo-Web server 119 to store the thus transferred resource files in the memory (step S1303). The storage location within the Web content storage 1133 where each resource file is stored is specified by the path to the "source location" indicated in the attribute of the matching Web content, and the storage location within the memory where the read resource file is to be stored is specified by the path to the "destination location" also indicated in the attribute of the matching Web content.

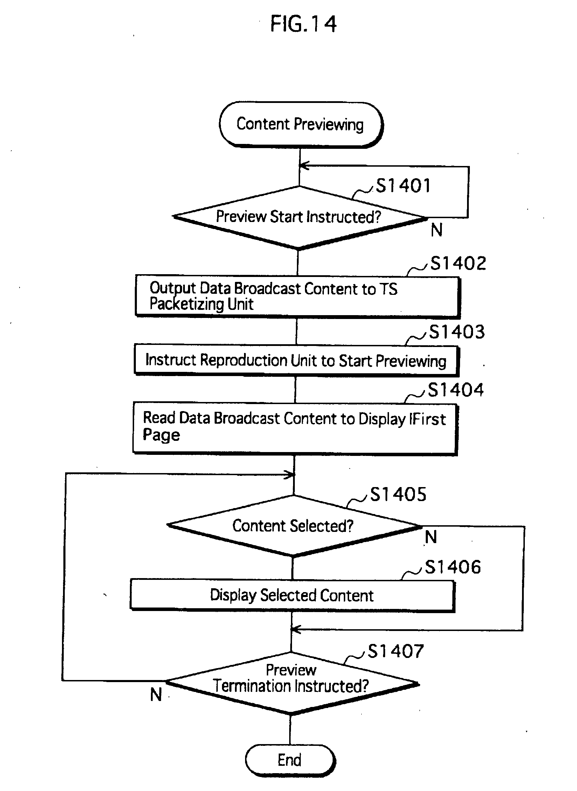

FIG. 14 is a flowchart showing the sequence of the content previewing operation. Hereinafter, description is given to the content previewing operation with reference to the flowchart in FIG. 14.

When receiving from the input unit 111 an input directing to start content previewing (step S1401:Y), the control unit 112 repeatedly reads from the data broadcast content storage 1131 the data broadcast content that is selected through the content registering operation, and outputs the read data broadcast content to the TS packetizing unit 114 (step S1402), and directs the reproduction unit 1164 to start previewing (step S1403).

The reproduction unit 1164 receives the data broadcast content inputted from the receive unit 1161 after transmitted from the transmission unit 115. Prior to the transmission, the data broadcast content has been packetized into TS by the TS packetizingunit 114. Upon receipt of the data broadcast content, the reproduction unit 1164 decodes the data broadcast content to reproduce, so that a first page for the data broadcast content is displayed on the display unit 117 (step S1404). The first page includes buttons, which is displayed in GUI, and each button is to move the first page to a page provided by the accumulation content or the Web content that is linked from the data broadcast content. Here, the user makes an input via one of the buttons in the first page being displayed, thereby selecting one of the accumulation contents or the Web contents all linked to the data broadcast content (step S1405:Y) In response to the user input, the reproduction unit 1164 reads the selected accumulation or Web content from the specified storage location, and reproduces the read accumulation or Web content on the display unit 117 (step S1406).

With the above operations, the user is allowed to preview the accumulation content and the Web content both linked to the selected data broadcast content just as in the actual broadcasting.

When receiving from the input unit 111 an input directing to terminate the content previewing (step S1407:Y), the control unit 112 terminates the content previewing. When receiving no such an input, the processing goes back to the step S1405.

### EMBODIMENT 2

In the embodiment 1 described above, the control unit 112 performs, in the accumulation content registering operation, the finale selection by excluding the accumulation contents that have been already recorded in the recording medium 1163 from the accumulation contents selected in the third selection. In an embodiment 2 described below, the final selection is made by selecting, from among the accumulation contents selected in the third selection, accumulation contents each linked to the selected data broadcast content.

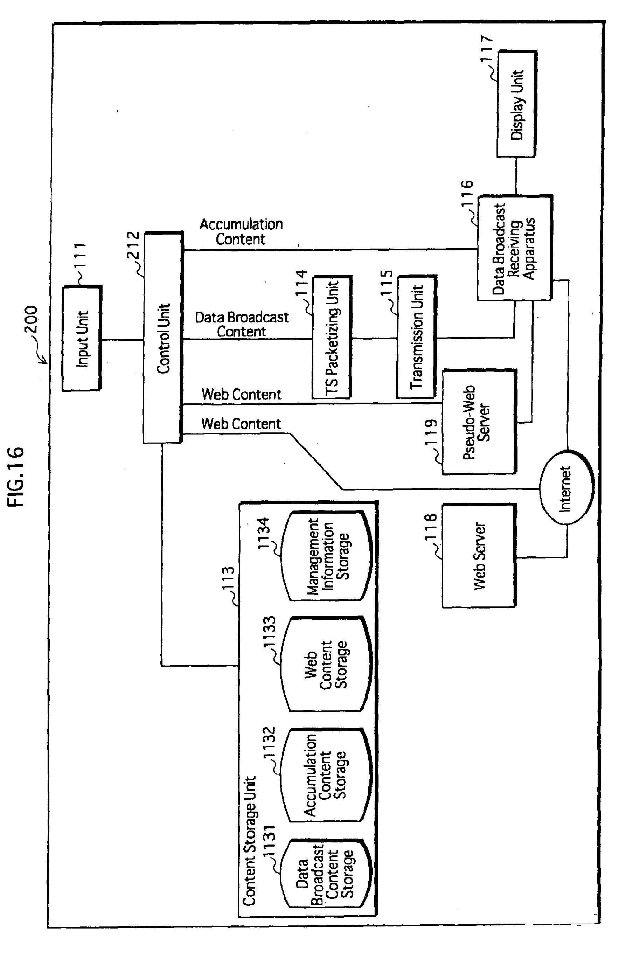

FIG. 16 is a block diagram showing the construction of a data broadcast content preview system 200 according to the embodiment 2 of the present invention.

Except a control unit 212, the components constituting the preview system 200 are the same as those of the preview system 100 according to the embodiment 1.

The embodiment 2 is similar to the embodiment 1 except that the accumulation content registering operation performed by the control unit 212 differs from that performed by the control unit 112. Thus, description is given mainly to the difference in the two operations for accumulation content registering.

The control unit 212 performs the same operations as the control unit 112 up to the third selection. Thus, description is given to the operations (corresponding to the step S1208 in FIG. 12) that are performed by the control unit 212 after the third selection is made.

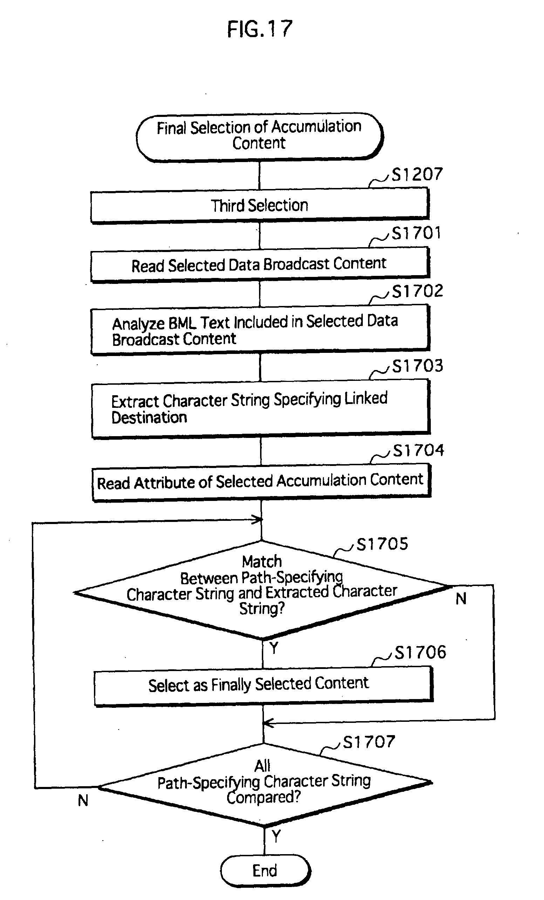

FIG. 17 is a flowchart showing the operation performed by the control unit 212 for the final selection.

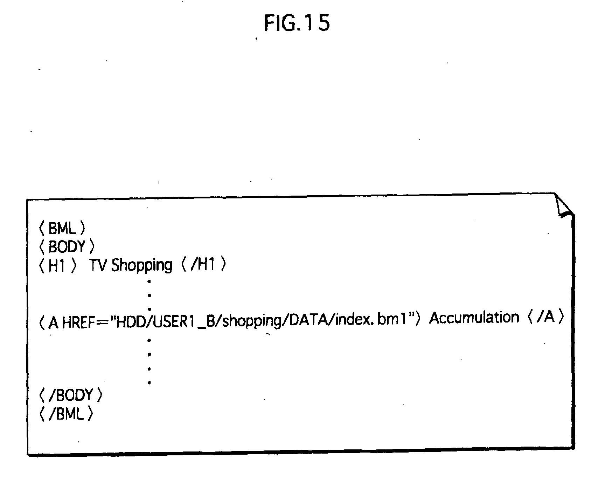

First, the control unit 212 makes the third selection in the same manner as the control unit 112 (step S1207). The control unit 212 then reads the selected data broadcast content from the data broadcast content storage 1131 (step S1701). Next, the control unit 212 analyzes the BML text included in the read data broadcast content (step S1702) to extract a character string describing the path to the linked destination (step S1703). (In the example shown in FIG. 15, to be extracted is the character string "HDD/USER1_B/shopping/DATA" that is preceded by the tag "A", and in another example (not illustrated), to be extracted is a character string that is preceded by the tag "arib-file://" according to the ARIB standards.) Next, the control unit 212 reads from the accumulation content storage 1132 an attribute of each accumulation content selected in the third selection (step S1704). The control unit 212 then compares the extracted character strings with the character string that is included in the read attribute and that specifies the "destination location" (hereinafter referred to as "path-specifying character string") to see if the path-specifying character string matches any of the extracted character strings (step S1705). If there is a match (step S1705:Y), the control unit 212 selects, in the final selection, the accumulation content corresponding to the attribute including the matching path-specifying character string (step S1706). Next, the control unit 212 judges whether the path-specifying character strings included in all the read attributes are compared with the extracted character strings (step S1707). When judging Yes in the step S1707, the control unit 212 terminates the processing, and when judging No in the step S1707, the control unit 212 performs the step S1705 for another path-specifying character string.

When there is no match in the step S1705 (step S1705:N), the control unit 212 performs the step S1707.

After the final selection, the control unit 212 transfers the accumulation contents selected in the final selection to the recording medium 1163 that is included in the accumulation unit 1162 where the transferred accumulation contents are stored. Yet, these operations are the same as those in the embodiment 1, and thus description thereof is omitted.

Note that the operations performed by the control unit 212 for the final selection as described above may be added to the sequence showing in FIG. 13 between the step S1302 and the step S1303.

To be more specific, the control unit 212 reads from the Web content storage 1133 an attribute of each Web content selected in the step S1302. Next, the control unit 212 compares the path-specifying character string included in the read attribute with the character strings extracted from the BML text included in the selected data broadcast content. If the path-specifying character string matches any of the extracted character strings, the control unit 212 selects, from among the Web contents selected in the step S1302, a Web content corresponding to the attribute having the matching path-specifying character string. In this case, the step S1303 shown in FIG. 13 is performed to the thus selected Web contents.

Alternatively, the above additional operations may be performed without performing the steps S1301 and S1302. That is, the selection through the above addition operations is made directly to the Web contents stored in the Web content storage 1133.

### EMBODIMENT 3

Hereinafter, description is given to an embodiment 3 of the present invention. The feature of the embodiment 3 lies in that the selection of the accumulation contents and the Web contents to be registered through the content registering operation is made based on project information generated in advance. The project information includes a list of the accumulation contents and the Web contents a linked to each data broadcast content.

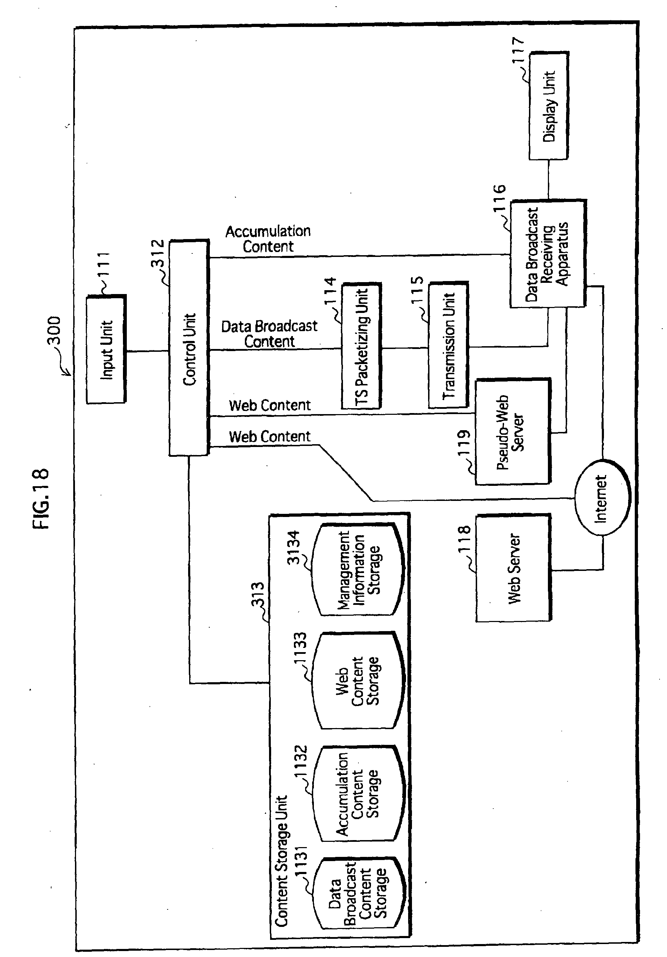

FIG. 18 is a block diagram showing the construction of a data broadcast content preview system 300 according to the embodiment 3.

The preview system 300 is composed of the same components as the preview system 100 of the embodiment 1 except a control unit 312 and a content storage unit 313. Hereinafter, description is given mainly to the difference of this embodiment from the embodiment 1.

The content storage unit 313 includes the data broadcast storage 1131, the accumulation content storage 1132, the Web content storage 1133, and a management information storage 3134. That is, the content storage unit 312 is composed of the same components as the content storage unit 113 of the embodiment 1 except the management information storage 3134.

The management information storage 3134 stores project information and content management information.

The "project information" is a piece of information generated for each data broadcast content stored in the data broadcast content storage 1131, and includes an event ID identifying a broadcast content, a list of content management information storage locations , and a list of preview start files .

The "list of content management information storage locations" is a list showing storage locations within the management information storage 3134 where pieces of content management information are stored. Here, the pieces of content management information correspond to accumulation contents and Web contents each linked to the data broadcast content.

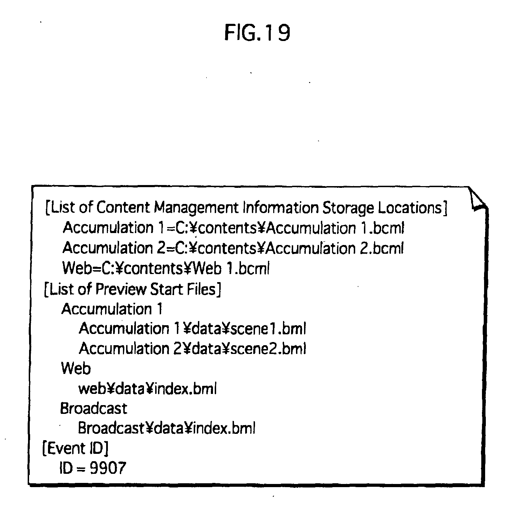

The "list of preview start files" is a list showing names of resource files to be displayed in a first page when the data broadcast content is selected. FIG. 19 shows one example of the project information.

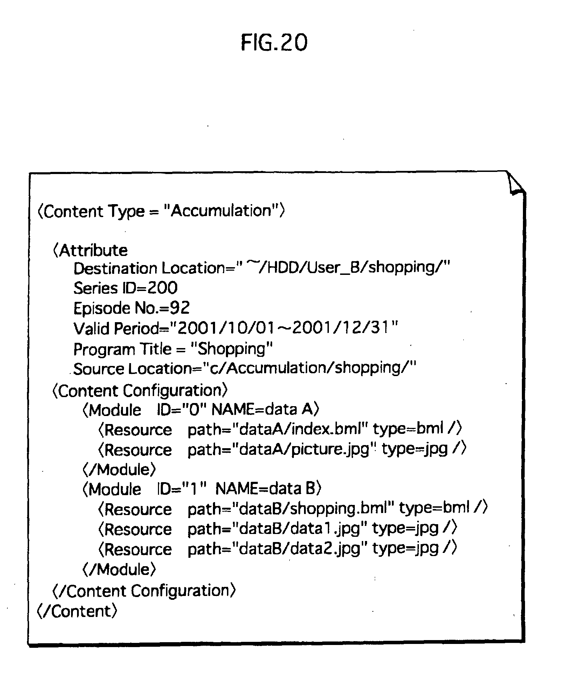

The "content management information" is a piece of information that is generated for each of the accumulation content and Web content. Each piece of the content management information shows a destination location to which the content is to be transferred for storage, the valid period, the title of the program series to which the program constituted by the content belongs, the source location, and the content configuration. FIG. 20 shows one example of the content management information.

The "content configuration" shows the module configuration of each resource file of the content, and the directories in which each resource file is to be stored at the destination location along with the name of the resource file to be stored therein.

In the example shown in FIG. 20, the content is composed of two modules: "data A" and "data B". The former module is composed of two resource files: "index.bml" and "picture.jpg", and the latter module is composed of three modules: "shopping.bml", "data1.jpg" and "data2.jpg". When transferred to the destination location, the "data A" module and the "data B" modules are to be stored in folders named "data A" and "data B", respectively, and both the folders reside in the "HDD/User_B/shopping" directory.

FIG. 8 shows the tree structure of the recording medium 1163 i.e., the destination location, where the content configured as above is stored in the "shopping" directory.

As described above, each accumulation content is stored in the recording medium 1163 in accordance with the module structure shown in the content management information.

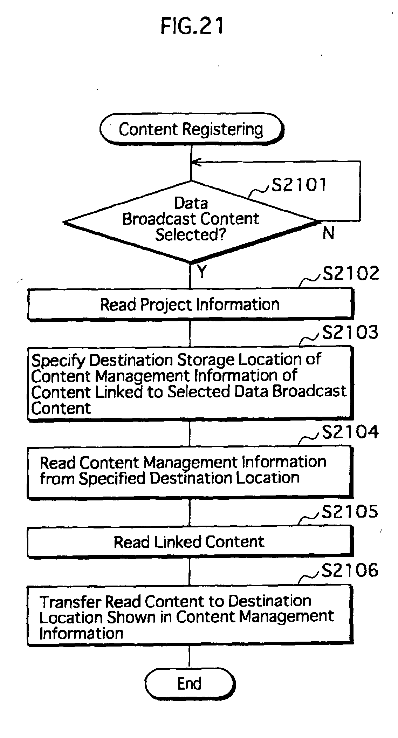

The control unit 312 performs the following operation for content registering. FIG. 21 is a flowchart showing the content registering operation performed by the control unit 312.

Upon receipt of an event ID inputted by a user for specifying the data broadcast content to preview, the input unit 111 passes the inputted event ID to the control unit 312 (step S2101:Y). In response, the control unit 312 reads from the management information storage 3134 the project information that includes the inputted event ID (step S2102). With reference to the read project information or, more specifically, to the list of content management information storage locations, the control unit 312 specifies destination storage locations of pieces of content management information corresponding to accumulations content and Web contents each linked to the selected data broadcast content (step S2103). The control unit 312 reads each piece of the content management information from the thus specified destination storage locations (step S2104), and then reads each content stored in the content storage unit 313 at the storage location specified in the read content management information (step S2105). The control unit then transfers each of the read contents to the destination location indicated in the content management information (step S2106).

### SUPPLEMENTAL REMARKS

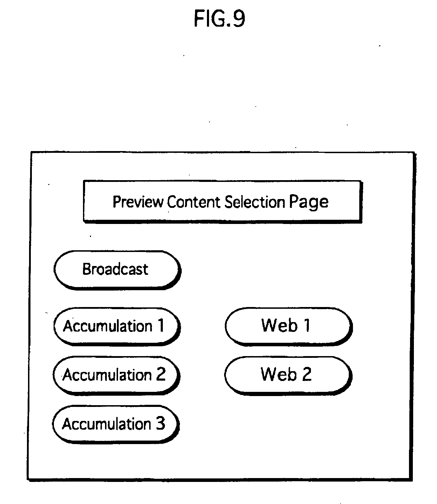

Up to this point, a data broadcast contents preview system according to the present invention has been described by way of the above embodiments. However, it goes without saying that the present invention is not limited to the above specific embodiments, and various modifications may be made as follows.
1. In the above embodiments 1-3, a data broadcast content constitutes a program together with at least one accumulation content and at least one Web content, and the program belongs to a program series composed of a plurality of, periodically updated programs. However, there may be a content that solely constitute one independent program that does not belong to any program series. A series ID and an episode number are assigned to such a program, and the program will be the only program bearing that particular series ID.
2. In the above embodiments 1-3, accumulation contents and Web contents to be registered are automatically selected by the control unit 112, 212 or 312 in accordance with the selected data broadcast content. However, the accumulation contents and Web contents to be registered may be selected directly by a user via the input unit 111.
3. In the above embodiments 1 and 2, to be displayed at the time when the preview is started is the first page for a selected data broadcast content. Alternatively, a preview content selection page may be displayed.
   The "preview content selection page" is a page that is displayed on the display unit 117 after the preview system is directed to start previewing and that is used for selecting a content to start previewing with. FIG. 9 shows one example of the preview content selection page. In the example shown in FIG. 9, the page includes GUI components of selection buttons' used for selecting a content to be displayed on the display unit 117.
   The preview content selection page is generated and displayed on the display unit 117 as follows.
   That is, the control unit 112 or 212 generates a first page content based on the attributes of the selected broadcast content, the accumulation contents and Web contents that are registered through the content registering operation. The first page content includes a description of a path specifying the storage location of each content. The control unit 112 or 212 then transfers the thus generated first page content to the recording medium 1163 and stores it at a predetermined storage location. This operation is performed, for example, after the step S1303 in the Web content registering operation shown in FIG. 13. Further, the first page content may be transmitted together with the data broadcast content.
   To be more specific, the "first page content" is a BML text file that is generated with reference to the attributes of each of the selected data broadcast content, accumulation contents, and includes a script for linking to each content.

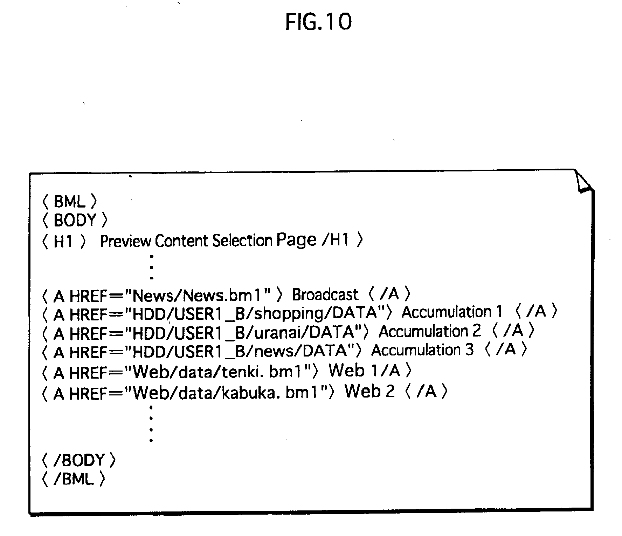

   FIG. 10 is a view showing one example of the first page content. The first page content shown in FIG. 10 is a description for displaying the preview content selection page shown in FIG. 9.
   In response to the instruction directing to start preview received from the control unit 112 or 212, the reproduction unit 1164 reads the first page content recorded in the recording medium 1163 at the predetermined storage location, and reproduces the read first page content on the display unit 117, whereby the preview content selection page is displayed. This operation may be performed in the content previewing operation as an alternative to the step S1404.
   Further, in the embodiment 3, the control unit 312 may generate the first page content with reference to the list of preview start files that is included in the project information. The control unit 312 then transfers the thus generated first page content to the predetermined storage location within the recording medium 1163. This operation may be performed after the step S2106 in the content registry operation shown in FIG. 21.
4. In the modification 3 above, the generated first page content is stored in the recording medium 1163. In the case where the recording medium is nonvolatile RAM (hereinafter referred to as "NVRAM", the following modification may be made. That is, to be stored in the NVRAM is a BML text including the script for a linking to the first page content that is stored at a predetermined storage location (for example, in a harddisk). (Hereinafter, such a BML text is referred to as a "link-specifying content"). Upon receipt of a preview start instruction, the reproduction unit 1164 refers to the link-specifying content stored in NVRAM so as to specify the storage location of the first page content. Thereafter, the reproduction unit 1164 reads the first page content from the specified storage location, and reproduces the read first page content.

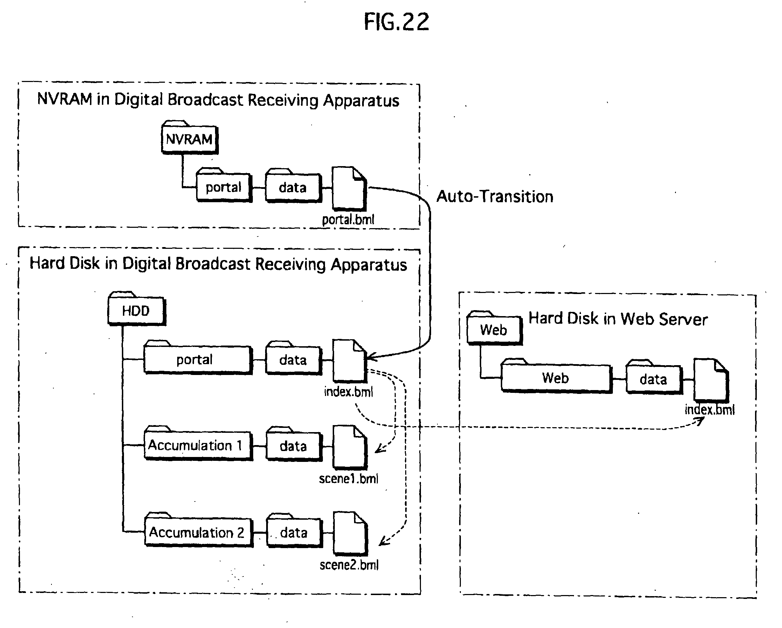

   FIG. 22 is a view conceptually illustrating the operations for reading the first page content from the linked storage location to reproduce. In the example shown in FIG. 22, the link-specifying content "portal.bml" is stored in NVRAM included in the data broadcast receiving apparatus, and the first page content is stored in the hard disk (HDD) also included in the data broadcast receiving apparatus.
   In addition, FIG. 22 also illustrates with the arrows the process sequence performed by the data broadcast receiving apparatus after receipt of the preview start instruction. To be more specific, the data broadcast receiving apparatus first accesses the link-specifying content stored in NVRAM so as to specify the storage location of the first page content. The data broadcast receiving apparatus then reads the first page content stored at the specified storage location in HDD, and reproduces the read first page content. In response to a user input selecting a content, the data broadcast receiving apparatus acquires the selected content, i.e., one of the linked accumulation contents "scene1.bml" and "scene2.bml", and the linked Web content "index.bml" from the storage location specified by the first page content.
   With this arrangement, it is not necessary to repeatedly write an first page content onto the nonvolatile RAM, so that wearing of the nonvolatile RAM is prevented.
5. In the above embodiments 1-3, a first page content is generated each time the content registering operation is performed. Alternatively, it is applicable to prestore, in the content storage unit 113 for example, a template content that includes a script describing a destination location of a content and a script describing a page layout for the preview content selection page. In this case, each time the content registering operation is performed, a character string specifying a destination location where each contents selected through the registering operation is to be stored based on the attribute of the content. A first page content is generated by merging the template content and the generated character string.
6. In the above embodiments 1-3, a first page content generated may be deleted from the recording medium 1163 at the time of system activation or termination, or at the time when receiving a user instruction. This modification is effective to prevent that the content selected by one user is previewed by another user without permission.
7. In the above embodiments 1-3, a first page content is linked not only to a BML text file but also to a material file. In the case where the first page content is linked to a material file, the BML text file that refers to the material file is retrieved from the files stored in the same directory, and the retrieved BML file is read. As a result, the graphics is displayed as a part of the preview content selection page.
8. The attribute of each content according to the above embodiments 1-3 may further includes information that is contained in the content management information according to the embodiment 3. In this case, the need for the content management information in the embodiment 3 is eliminated.
9. In the above embodiments 1-3, the selected broadcast content is specified by the event ID. Alternatively, it may be specified by the broadcasting date or the series ID. Alternatively, it is applicable to display the data broadcast schedule stored in the management information storage 1134, so that a user may input via GUI a selection of a data broadcast content to preview.

Although the present invention has been fully described by way of examples with reference to the accompanying drawings, it is to be noted that various changes and modifications will be apparent to those skilled in the art. Therefore, unless such changes and modifications depart from the scope of the present invention, they should be construed as being included therein.

## Claims

1. Adatabroadcast content preview system for reproducing, for a preview purpose, data broadcast contents in an environment simulating an actual data broadcasting environment, comprising:
a transmitting apparatus for transmitting a data broadcast content in a form of a transport stream, the data broadcast content constituting one broadcast program; and
a receiving apparatus for receiving the data broadcast content to reproduce in the simulated environment, the receiving apparatus having a storage area, wherein
the transmitting apparatus includes:
a content storing unit operable to store (i) a plurality of accumulation contents, (ii) a plurality of attributes each corresponding to an accumulation content and showing a storage location in the storage area at which the accumulation content is to be stored, and (iii) a plurality of data broadcast contents each having link information showing at least one storage location at which an accumulation content to be linked is to be stored;
a designation receiving unit operable to receive designation as to which of the data broadcast contents is to be reproduced;
a transferring unit operable to select, from the accumulation contents stored in the content storing unit, accumulation contents that are to be linked from the designated data broadcast content, and transfer the selected accumulation contents to the receiving apparatus without assembling into a transport stream, the selection and the transfer being performed upon receipt of the designation; and
a transmitting unit operable to read, upon completion of the transfer of the selected accumulation contents, the designated data broadcast content from the content storing unit in order to transmit to the receiving apparatus in a form of a transport stream, and
the receiving apparatus includes:
a recording unit operable to record each transferred accumulation content in the storage area at the storage location shown by the attribute; and
a reproducing unit operable to reproduce the received data broadcast content after decoding, and read to reproduce an accumulation content recorded in the storage area at the storage location shown by the link information included in the data broadcast content.

2. The data broadcast content preview system of Claim 1, wherein
the transferring unit includes:
a link information extracting subunit operable to analyze the designated data broadcast content in order to extract a storage location shown by the link information; and
a judging subunit operable to judge whether the extracted storage location matches a storage location shown by the attribute corresponding to each accumulation content stored in the content storing unit, and
the transferring unit selects an accumulation content corresponding to the attribute that matches.

3. The data broadcast content preview system of Claim 2, wherein
each accumulation content stored in the content storing unit constitutes a program that belongs to a program series, the program series being composed of a plurality of, periodically updated programs,
each attribute shows a same storage location in the case where the attribute corresponds to an accumulation content constituting a program that belongs to a same program series,
the content storing unit further stores (i) broadcast schedule information and (ii) accumulation content schedule information that includes update information and program series ID information, the broadcast schedule information showing start-time at which broadcasting of each data broadcast content starts, the update information showing end-time at which broadcasting of each accumulation content ends and a number of times that a program constituted by each accumulation content has been updated, and the program series ID information uniquely identifying a program series to which a program constituted by each accumulation content belongs,
the transferring unit further includes:
a start-time specifying subunit operable to specify, with reference to the broadcast schedule information, start-time at which broadcasting of the designated data broadcast content starts;
a first selection subunit operable to select, from the accumulation contents stored in the content storing unit, accumulation contents of which end-time shown by the accumulation content schedule information is within a predetermined period prior to the specified start-time of the designated data broadcast content; and
a second selection subunit operable to select, from the accumulation contents selected by the first selection subunit, an accumulation content having a largest number of update times among accumulation contents each constituting a program that belongs to a same program series, the second selection being made with reference to the accumulation content schedule information, and
the judging subunit judges whether the extracted storage location matches a storage location shown by each attribute corresponding to an accumulation content that is selected by the second selection subunit.

4. The data broadcast content preview system of Claim 3, wherein
the accumulation content schedule information further includes broadcast area information showing a broadcast area for which each accumulation content is to be broadcast,
the recording unit further records setting information in the storage area, the setting information showing a predetermined broadcast area, and
the second selection subunit further selects, from the accumulation contents already selected by the second selection subunit, accumulation contents of which broadcast area shown by the broadcast area information includes the broadcast area shown by the setting information.

5. The data broadcast content preview system of Claim 4, further includes a Web server for storing Web contents, wherein
the content storing unit further stores (i) a plurality of Web contents, (ii) Web content schedule information showing a valid period of each Web content, and (iii) a plurality of attributes each corresponding to a Web content and showing a storage location in the Web server at which the Web content is to be stored,
each data broadcast content stored in the content storing unit has second link information showing at least one storage locations at which a Web content to be linked is to be stored,
the transferring unit further includes a Web content selection subunit operable to select, from the Web contents stored in the content storing unit, Web contents of which valid period begins before and ends after the specified start-time of the designated data broadcast content, the selection being performed upon receipt of the designation of the data broadcast content,
the transferring unit further transfers each selected Web content to the storage location shown by the attribute,
the transmitting unit performs the transmission of the designated broadcast content upon completion of the transfer of the selected Web contents,
the receiving apparatus further includes an acquisition unit operable to access the Web server in order to acquire a Web content stored at the storage location shown by the second link information, the second link information being included in the data broadcast content reproduced by the reproducing unit, and
the reproducing unit further reproduces each acquired Web content.

6. The data broadcast content preview system of Claim 5, wherein the judging subunit further judges whether the extracted storage location matches a storage location shown by the attribute corresponding to each selected Web content, and
the Web content selection subunit selects a Web content corresponding to the attribute that matches.

7. The data broadcast content preview system of Claim 6, wherein
the transferring unit further includes a page content generating subunit operable to generate a page content based on an attribute of each finally selected accumulation content and an attribute of each selected Web content, the page content functioning to display a selection page, the selection page receiving via GUI a user input selecting a storage location at which one of the accumulation contents and the Web contents is stored,
the transferring unit transfers the generated page content to the receiving apparatus,
the recording unit further records the transferred page content in the storage area, and
the reproducing unit further reproduces the recorded page content at a start of previewing.

8. The data broadcast content preview system of Claim 7, wherein
the storage area includes:
a hard disk for storing the page content; and
a nonvolatile RAM for storing a location-specifying content, the location-specifying content including a script that shows a storage location within the hard disk at which the page content is stored, and
the reproducing unit reads, at the start of previewing, the location-specifying content stored in the nonvolatile RAM to specify the storage location at which the page content is stored, and reads the page content from the specified storage location to reproduce.

9. The data broadcast content preview system of Claim 5, wherein
the transferring unit further includes a page content generating subunit operable to generate a page content based on an attribute of each finally selected accumulation content and an attribute of each selected Web content, the page content functioning to display a selection page, the selection page receiving via GUI a user input selecting a storage location at which one of the accumulation contents and the Web contents is stored,
the transferring unit transfers the generated page content to the receiving apparatus,
the recording unit further records the transferred page content in the storage area, and
the reproducing unit further reproduces the recorded page content at a start of previewing.

10. The data broadcast content preview system of Claim 9, wherein
the storage area includes:
a hard disk for storing the page content; and
a nonvolatile RAM for storing a location-specifying content, the location-specifying content including a script that shows a storage location within the hard disk at which the page content is stored, and
the reproducing unit reads, at the start of previewing, the location-specifying content stored in the nonvolatile RAM to specify the storage location at which the page content is stored, and reads the page content from the specified storage location to reproduce.

11. The data broadcast content preview system of Claim 4, further comprising a Web server for storing Web contents, wherein
the content storing unit further stores (i) a plurality of Web contents, and (ii) a plurality of attributes each corresponding to a Web content and showing a storage location in the Web server at which the Web content is to be stored,
each data broadcast content stored in the content storing unit has second link information showing at least one storage location at which a Web content to be linked is to be stored,
the judging subunit further judges whether the extracted storage location matches a storage location shown by the attribute corresponding to each Web content stored in the content storing unit,
the transferring unit further includes a Web content selection subunit operable to select, from the Web contents stored in the content storing unit, Web contents corresponding to the attribute that matches,
the transferring unit further transmits the selected Web content to the Web server,
the transmitting unit performs the transmission of the designated broadcast content upon completion of the transfer of the selected Web contents,
the receiving apparatus further includes an acquisition unit operable to access the Web server in order to acquire a Web content stored at the storage location shown by the second link information, the second link information being included in the data broadcast content reproduced by the reproducing unit, and
the reproducing unit further reproduces each acquired Web content.

12. The data broadcast content preview system of Claim 11, wherein
the transferring unit further includes a page content generating subunit operable to generate a page content based on an attribute of each finally selected accumulation content and an attribute of each selected Web content, the page content functioning to display a selection page, the selection page receiving via GUI a user input selecting a storage location at which one of the accumulation contents and the Web contents is stored,
the transferring unit transfers the generated page content to the receiving apparatus,
the recording unit further records the transferred page content in the storage area, and
the reproducing unit further reproduces the recorded page content at a start of previewing.

13. The data broadcast content preview system of Claim 12, wherein
the storage area includes:
a hard disk for storing the page content; and
a nonvolatile RAM for storing a location-specifying content, the location-specifying content including a script that shows a storage location within the hard disk at which the page content is stored, and
the reproducing unit reads, at the start of previewing, the location-specifying content stored in the nonvolatile RAM to specify the storage location at which the page content is stored, and reads the page content from the specified storage location to reproduce.

14. The data broadcast content preview system of Claim 1, wherein
the content storing unit further stores broadcast schedule information and accumulation content schedule information, the broadcast schedule information showing start-time at which broadcasting of each data broadcast content starts, and the accumulation content schedule information showing end-time at which broadcasting of each accumulation content ends,
the transferring unit generates, each time when transferring a selected accumulation content to the receiving apparatus, accumulation content ID information identifying the accumulation content, and transfers the accumulation content ID information to the receiving apparatus,
the recording unit further records the accumulation content ID information in the storage area, and
the transferring unit further includes:
a start-time specifying subunit operable to specify, with reference to the broadcast schedule information, start-time at which broadcasting of the designated data broadcast content starts;
a first selection subunit operable to select, from the accumulation contents stored in the content storing unit,. accumulation contents of which end-time shown by the accumulation content schedule information is within a predetermined period prior to the specified start-time of the designated data broadcast content; and
a second selection subunit operable to select accumulation contents with reference to the accumulation content ID information, the selection being preformed by excluding, from the accumulation contents selected by the first selection subunit, accumulation contents that have been stored in the storage area.

15. The data broadcast content preview system of Claim 14, wherein
each accumulation content stored in the content storing unit constitutes a program that belongs to a program series, the program series being composed of a plurality of, periodically updated programs,
each attribute shows a same storage location in the case where the attribute corresponds to an accumulation content constituting a program that belongs to a same program series,
the accumulation content schedule information further includes update information and program series ID information, the update information showing a number of times that a program constituted by each accumulation content has been updated, and the program series ID information uniquely identifying a program series to which a program constituted by each accumulation content belongs, and
the first selection subunit further selects, from the accumulation contents that are already selected by the first selection subunit, an accumulation content having a largest number of update times among accumulation contents each constituting a program that belongs to a same program series, the further selection by the first selection subunit being made with reference to the accumulation content schedule information.

16. The data broadcast content preview system of Claim 15, wherein
the accumulation content schedule information further includes broadcast area information showing a broadcast area for which each accumulation content is to be broadcast,
the recording unit further records setting information in the storage area, the setting information showing a predetermined broadcast area, and
the second selection subunit further selects, from the accumulation contents already selected by the second selection subunit, accumulation contents of which broadcast area shown by the broadcast area information includes the broadcast area shown by the setting information.

17. The data broadcast content preview system of Claim 16, further includes a Web server for storing Web contents, wherein
the content storing unit further stores (i) a plurality of Web contents, (ii) Web content schedule information showing a valid period of each Web content, and (iii) a plurality of attributes each corresponding to a Web content and showing a storage location in the Web server at which the Web content is to be stored,
each data broadcast content stored in the content storing unit has second link information showing at least one storage locations at which a Web content to be linked is to be stored,
the transferring unit further includes a Web content selection subunit operable to select, from the Web contents stored in the content storing unit, Web contents of which valid period begins before and ends after the specified start-time of the designated data broadcast content, the selection being performed upon receipt of the designation of the data broadcast content,
the transferring unit further transfers each selected Web content to the storage location shown by the attribute,
the transmitting unit performs the transmission of the designated broadcast content upon completion of the transfer of the selected Web contents,
the receiving apparatus further includes an acquisition unit operable to access the Web server in order to acquire a Web content stored at the storage location shown by the second link information, the second link information being included in the data broadcast content reproducedby the reproducing unit, and
the reproducing unit further reproduces each acquired Web content.

18. The data broadcast content preview system of Claim 17, wherein
the transferring unit further includes a page content generating subunit operable to generate a page content based on an attribute of each finally selected accumulation content and an attribute of each selected Web content, the page content functioning to display a selection page, the selection page receiving via GUI a user input selecting a storage location at which one of the accumulation contents and the Web contents is stored,
the transferring unit transfers the generated page content to the receiving apparatus,
the recording unit further records the transferred page content in the storage area, and
the reproducing unit further reproduces the recorded page content at a start of previewing.

19. The data broadcast content preview system of Claim 18, wherein
the storage area includes:
a hard disk for storing the page content; and
a nonvolatile RAM for storing a location-specifying content, the location-specifying content including a script that shows a storage location within the hard disk at which the page content is stored, and
the reproducing unit reads, at the start of previewing, the location-specifying content stored in the nonvolatile RAM to specify the storage location at which the page content is stored, and reads the page content from the specified storage location to reproduce.

20. The data broadcast content preview system of Claim 1,
each accumulation content stored in the content storing unit constitutes a program that belongs to a program series, the program series being composed of a plurality of, periodically updated programs,
each attribute shows a same storage location in the case where the attribute corresponds to an accumulation content constituting a program that belongs to a same program series,
the content storing unit further stores (i) broadcast schedule information and (ii) accumulation content schedule information that includes update information and program series ID information, the broadcast schedule information showing start-time at which broadcasting of each data broadcast content starts, the update information showing end-time at which broadcasting of each accumulation content ends and a number of times that a program constituted by each accumulation content has been updated, and the program series ID information uniquely identifying a program series to which a program constituted by each accumulation content belongs, and
the transferring unit further includes:
a start-time specifying subunit operable to specify, with reference to the broadcast schedule information, start-time at which broadcasting of the designated data broadcast content starts;
a first selection subunit operable to select, from the accumulation contents stored in the content storing unit, accumulation contents of which end-time shown by the accumulation content schedule information is within a predetermined period prior to the specified start-time of the designated data broadcast content; and
a second selection subunit operable to select, from the accumulation contents selected by the first selection subunit, an accumulation content having a largest number of update times among accumulation contents each constituting a program that belongs to a same program series, the second selection being made with reference to the accumulation content schedule information.

21. The data broadcast content preview system of Claim 20, wherein
the accumulation content schedule information further includes broadcast area information showing a broadcast area for which each accumulation content is to be broadcast,
the recording unit further records setting information in the storage area, the setting information showing a predetermined broadcast area, and
the second selection subunit further selects, from the accumulation contents already selected by the second selection subunit, accumulation contents of which broadcast area shown by the broadcast area information includes the broadcast area shown by the setting information.

22. The data broadcast content preview system of Claim 21, further includes a Web server for storing Web contents, wherein
the content storing unit further stores (i) a plurality of Web contents, (ii) Web content schedule information showing a valid period of each Web content, and (iii) a plurality of attributes each corresponding to a Web content and showing a storage location in the Web server at which the Web content is to be stored,
each data broadcast content stored in the content storing unit has second link information showing at least one storage locations at which a Web content to be linked is to be stored,
the transferring unit further includes a Web content selection subunit operable to select, from the Web contents stored in the content storing unit, Web contents of which valid period begins before and ends after the specified start-time of the designated data broadcast content, the selection being performed upon receipt of the designation of the data broadcast content,
the transferring unit further transfers each selected Web content to the storage location shown by the attribute,
the transmitting unit performs the transmission of the designated broadcast content upon completion of the transfer of the selected Web contents,
the receiving apparatus further includes an acquisition unit operable to access the Web server in order to acquire a Web content stored at the storage location shown by the second link information, the second link information being included in the data broadcast content reproduced by the reproducing unit, and
the reproducing unit further reproduces each acquired Web content.

23. The data broadcast content preview system of Claim 1, wherein
the content storing unit further stores (i) broadcast schedule information and (ii) accumulation content schedule information that includes broadcast area information, the broadcast schedule information showing start-time at which broadcasting of each data broadcast content starts, and the broadcast area information showing end-time at which broadcasting of each accumulation content ends and a broadcast area for which each accumulation content is to be broadcast,
the recording unit further records setting information in the storage area, the setting information showing a predetermined broadcast area, and
the transferring unit further includes:
a start-time specifying subunit operable to specify, with reference to the broadcast schedule information, start-time at which broadcasting of the designated data broadcast content starts;
a first selection subunit operable to select, from the accumulation contents stored in the content storing unit, accumulation contents of which end-time shown by the accumulation content schedule information is within a predetermined period prior to the specified start-time of the designated data broadcast content; and
a second selection subunit operable to select, from the accumulation contents selected by the first selection subunit, accumulation contents of which broadcast area shown by the broadcast area information includes the broadcast area shown by the setting information.

24. The data broadcast content preview system of Claim 1, wherein the transferring unit further includes a page content generating subunit operable to generate a page content based on an attribute of each finally selected accumulation content, the page content functioning to display a selection page, the selection page receiving via GUI a user input selecting a storage location at which one of the accumulation contents is stored,
the transferring unit transfers the generated page content to the receiving apparatus,
the recording unit further records the transferred page content in the storage area, and
the reproducing unit further reproduces the recorded page content at a start of previewing.

25. The data broadcast content preview system of Claim 24, wherein
the storage area includes:
a hard disk for storing the page content; and
a nonvolatile RAM for storing a location-specifying content, the location-specifying content including a script that shows a storage location within the hard disk at which the page content is stored, and
the reproducing unit reads the location-specifying content stored in the nonvolatile RAM to specify the storage location at which the page content is stored, and reads the page content from the specified storage location to reproduce.

26. A data broadcast content preview system for reproducing, for a preview purpose, data broadcast contents in an environment simulating an actual data broadcasting environment, comprising:
a transmitting apparatus for transmitting a data broadcast content in a form of a transport stream, the data broadcast content constituting one broadcast program; and
a receiving apparatus for receiving the data broadcast content to reproduce in the simulated environment, the receiving apparatus having a storage area, wherein
the transmitting apparatus includes:
a content storing unit operable to store (i) a plurality of accumulation contents each to be stored in the storage area, (ii) project information generated for each data broadcast content, each piece of project information showing a storage location at which an accumulation content linked from the data broadcast content is currently stored and a storage location at which the accumulation content is to be stored in the storage area, and (iii) a plurality of data broadcast contents each having link information showing at least one storage location at which an accumulation content to be linked is to be stored;
a designation receiving unit operable to receive designation as to which of the data broadcast contents is to be reproduced;
a transferring unit operable to select, from the accumulation contents stored in the content storing unit, accumulation contents to be linked from the designated data broadcast content, and transfer the selected accumulation contents to the receiving apparatus without assembling into a transport stream, the selection being performed with reference to the project information, and the selection and the transfer being performed upon receipt of the designation; and
a transmitting unit operable to read, upon completion of the transfer of the selected accumulation contents, the designated data broadcast content from the content storing unit in order to transmit to the receiving apparatus in a form of a transport stream, and
the receiving apparatus includes:
a recording unit operable to record each transferred accumulation content in the storage area at the storage location shown by the attribute; and
a reproducing unit operable to reproduce the received data broadcast content after decoding, and read to reproduce an accumulation content recorded in the storage area at the storage location shown by the link information included in the data broadcast content.

27. The data broadcast content preview system of Claim 26, wherein
the content storing unit further stores a plurality of Web content each linked from a data broadcast content,
the data content preview system further comprising a Web server for storing Web contents,
the project information further includes information specifying a storage location at which a Web content linked from a data broadcast content is currently stored, and a storage location within the Web server at which the Web content is to be stored,
the transferring unit selects, from the Web contents stored in the content storing unit, Web contents linked from the designated data broadcast content, and reads from the content storing unit each selected Web content to transfer to the storage location in the Web server, the selection and the transfer being performed with reference to the project information corresponding to the designated data broadcast program.

28. The data broadcast content preview system of Claim 27, wherein the transferring unit further includes a page content generating subunit operable to generate a page content based on the project information, the page content functioning to display a selection page, the selection page receiving via GUI a user input selecting a storage location at which one of the Web contents is stored,
the transferring unit transfers the generated page content to the receiving apparatus,
the recording unit records the transferred page content in the storage area, and
the reproducing unit further reproduces, at a start of previewing, the recorded page content.

29. The data broadcast content preview system of Claim 28, wherein
the storage area includes:
a hard disk for storing the page content; and
a nonvolatile RAM for storing a location-specifying content, the location-specifying content including a script that shows a storage location within the hard disk at which the page content is stored, and
the reproducing unit reads, at the start of previewing, the location-specifying content stored in the nonvolatile RAM to specify the storage location at which the page content is stored, and reads the page content from the specified storage location to reproduce.
